# EUROPÄISCHE PATENTSCHRIFT

(11) **EP 0 591 726 B1**
(45) Veröffentlichungstag und Bekanntmachung des Hinweises auf die Patenterteilung: **13.03.1996**
(21) Anmeldenummer: 93114832.4
(22) Anmeldetag: 15.09.1993
(51) Int. Cl.: B60R 19/02, B60R 19/42, B62D 21/02, B60R 19/56, B60K 5/02, B60G 7/02

(54) **Nutzfahrzeug, insbesondere Frontlenker-Lastkraftwagen**
Industrial vehicle, especially lorry with forward-mounted cab
Véhicule utilitaire, en particulier camion avec cabine à l'avant

(30) Priorität: 09.10.1992 DE 4234095
(43) Veröffentlichungstag der Anmeldung: 13.04.1994
(73) Patentinhaber: MAN Nutzfahrzeuge Aktiengesellschaft, D-80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- DE-A- 2 039 309
- DE-A- 2 714 017
- DE-A- 3 312 446
- DE-A- 3 827 923
- DE-A- 4 112 372
- FR-A- 659 850
- FR-A- 2 214 281
- FR-A- 2 308 539
- FR-A- 2 453 755
- FR-A- 2 667 839
- US-A- 1 894 602

## Beschreibung

Die Erfindung betrifft ein Nutzfahrzeug, insbesondere Frontlenker-Lastkraftwagen, mit Merkmalen der im Oberbegriff des Anspruchs 1 angegebenen Art.

Die Erfindung gebt gemäß dem Oberbegriff des Anspruches 1 aus von einem Stand der Technik, wie aus der DE-A-38 27 923 bekannt. Dort ist ein Passivmechanismus hinter dem Stoßfänger gegeben, der durch ein energieverzehrend ausgebildetes Fahrgestell-Vorderteil gebildet ist, wobei die Energieverzehrung beim Aufprall eines Fahrzeugesdurch in Querrichtung V-förmig auseinanderstrebende Trägerteile am vorderen Ende jedes Rahmen-Längsträgers erfolgt.

Nutzfahrzeuge weisen unabhängig von ihrer Bauart üblicherweise ein Fahrgestell auf, dessen Rahmen aus zwei mit ihrer Oberkante in einer horizontalen Ebene liegenden Längsträgern besteht, die über mehrere Querträger verbunden sind. Bedingt durch diese Ausgestaltung und Anordnung der Rahmen-Längsträger und die vorgegebene Rahmenhöhe zwischen Fahrbahn und Rahmen-Oberkante ist auch regelmäßig die Einbaulage des Antriebsaggregates und die Anbauhöhe des Fahrerhauses mit entsprechendem Abstand zwischen Fahrbahn und Fahrerhausboden festgelegt. Durch die Anbauhöhe des Fahrerhauses ist wiederum die Höhe des Einstieges festgelegt. Hohe Einstiege erschweren den Zutritt zum Fahrerhaus.

Die Querschnitts-Höhe der beiden Rahmen-Längsträger kann je nach zulässigem Gesamtgewicht des Nutzfahrzeuges bis zu 400 mm betragen kann. Bedingt dadurch ist für die Herstellung dieser Rahmen-Längsträger relativ viel Material notwendig. Außerdem tragen die Rahmen-Längsträger in ganz erheblichem Maße zum Leergewicht des Nutzfahrzeuges bei. Aufgrund der Festigkeit des Materiales, des Querschnittes der Rahmen-Längsträger und der diese verbindenden Querträger ergibt sich eine bestimmte Biegesteifigkeit des Rahmens. Eine erforderliche Rahmen-Biegesteifigkeit kann daher nur durch eine entsprechende Auslegung dieser Komponenten erzielt werden.

Darüber hinaus sind bei Nutzfahrzeugen Unterfahrschutzeinrichtungen front- und heckseitig sowie seitlich zwischen Vorder- und Hinterachsen Vorschrift. Heckseitig ist hierzu eine Rammschutzleiste vorgesehen, die über stabile Abstandshalter am Rahmen befestigt ist. An den Nutzfahrzeug-Längsseiten sind zwischen den Vorder- und Hinterachsen Unterfahrschutzleisten gegeben, die über stabile Halter am Rahmen abgestützt sind. Auch der vordere Stoßfänger ist in der Regel fest am Rahmen befestigt. Aus Sicht dieser Konstruktionen ergibt sich im Falle des Aufpralls eines Pkw im Bereich der Unterfahrschutzeinrichtungen, daß diesem nutzfahrzeugseitig ein praktisch starrer Aufprallkörper entgegensteht, was je nach Aufprallgeschwindigkeit zu mehr oder weniger starken Beschädigungen am aufprallenden Pkw und hohem Verletzungsrisiko der Pkw-Insassen führt. Die nutzfahrzeugseitig stabile Anordnung der Unterfahrschutzeinrichtungen war dabei auch aus Sicht dessen notwendig, weil es damit galt, insbesondere die im Raum hinter den front- und heckseitigen Stoßfängern sowie seitlichen Unterfahrschutzleisten am Rahmen befestigten Fahrzeugteile/Aggregate im Falle eines Pkw-Aufpralls gegen Beschädigungen zu schützen. Es ist nur zwar schon bekannt - siehe beispielsweise DE 38 08 812 A1 und DE 38 08 813 A1 - an einem Nutzfahrzeug frontseitig einen Stoßfänger vorzusehen, der in Rahmen-Längsrichtung beweglich ist. Dieser Stoßfänger ist bei der erstgenannten Offenlegungsschrift dahingehend ausgebildet, daß ein aufprallender Pkw zur Seite hin abgeleitet werden kann. Bei der zweitgenannten Offenlegungsschrift ist eine Vorrichtung vorgesehen, mit der der Stoßfänger zur Verlängerung des Verformungsweges bei einem Pkw-Aufprall in Richtung der Fahrzeuglängsachse nach vorne ausfahrbar und/oder schwenkbar ausgestaltet ist. Beide Lösungen erfordern einen Aktivmechanismus zur Bewegungs-Steuerung des Stoßfängers. Ein solcher Aktivmechanismus mit Steuerung ist relativ teuer und setzt im Bereich hinter dem Stoßfänger auch entsprechend viel Platz für die Anlenkung der nötigen Betätigungsorgane voraus.

Es ist daher Aufgabe der Erfindung, ein Nutzfahrzeug der eingangs genannten Art dahingehend zu verbessern, daß das Antriebsaggregat und das Fahrerhaus gegenüber herkömmlichen Anordnungen um ein gewisses Maß tiefer legbar sind und außerdem die erforderliche Biegefestigkeit des Rahmens mit geringerem Gewicht und Materialeinsatz auch im Hinblick darauf realisierbar ist, daß am Nutzfahrzeug gegen einen Pkw-Aufprall günstigere Unterfahrschutzeinrichtungen anbringbar und Beschädigungen von nutzfahrzeugseitig gegebenen Aggregaten/Anbauteilen weitestgehend vermeidbar oder begrenzbar sind.

Diese Aufgabe ist bei einem Nutzfahrzeug der gattungsgemäßen Art durch die im Kennzeichen des Anspruchs 1 angegebene Merkmalskombination gelöst.

Vorteilhafte Ausgestaltungen/Weiterbildungen dieser Lösung sind in den Unteransprüchen angegeben.

Verschiedene Merkmale dieser Erfindung sind für sich in den Anmeldungen EP-A-591719, EP-A-591721 und EP-A-591722 mit gleichen Prioritätstag wie die vorliegende Anmeldung beansprucht.

Dadurch, daß der Rahmen vordere Längsträger-Abschnitte aufweist, die gegenüber der im hinteren Fahrgestellbereich gegebenen Rahmenhöhe zumindest partiell abgesenkt und zur Bildung eines - von vorn gesehen - V-förmigen Einbaubereiches für das Antriebsaggregat in sich von der Vertikalen abweichend zumindest partiell schräg gestellt sind, ist ein vergrößerter Einbauraum geschaffen, der eine vergleichsweise tiefe Anordnung des Antriebsaggregates zwischen den Rahmen-Längsträgern und infolge dessen auch eine Tieferlegung des Fahrerhauses ermöglicht, wodurch sich dessen Einstiegshöhe reduziert. In vorteilhafter Weise können die vorderen Längsträger-Abschnitte auch mit speziellen Aus- und Einbuchtungen versehen und spezielle Querträger vorgesehen sein, so daß eine sehr vorteilhafte, raumsparende und kostengünstige Einzelradaufhängung für die Vorderräder zum Beispiel mit direkter Anlenkung besonders gestalteter Dreiecks-Querlenker sowie günstiger Anlenkung der erforderlichen Federungsorgane realisierbar ist. Insbesondere sind dann an den vorderen Längsträger-Abschnitten keine separaten Lagerböcke oder sonstigen Anschlußorgane, die extra vorzufertigen und dann anzubringen wären, für die Anbindung der Einzelradaufhängungs- und - federungsorgane notwendig. Es verkompliziert sich lediglich die Form der vorderen Längsträger-Abschnitte, die Kosten der teureren Preßwerkzeuge werden aber z. B. durch Entfall der nicht notwendigen Lagerböcke mehr als kompensiert.

Bedingt durch die desweiteren erfindungsgemäße Auflösung jedes der beiden Rahmen-Längsträger etwa ab der Fahrerhaus-Rückwand in ein oberes und ein unteres Längsträger-Teil ist somit in Verbindung mit den jeweiligen Querträgern ein Rahmenmittelabschnitt darstellbar, mit dem Ergebnis einer sehr hohen Biegesteifigkeit bei gleichzeitig geringerem Gewicht und relativ geringem Materialeinsatz für jenen Bereich des Nutzfahrzeuges, der naturgemäß wegen der An- und Aufbauten und Beladung am stärksten belastet ist. Rahmenbereiche hinter der/den Hinterachse(n) und vor dem Auflösungsbereich unter dem Fahrerhaus erfordern regelmäßig keine solch hohe Biegesteifigkeit und können daher entsprechend leichter, mit weniger Materialeinsatz und konstruktiv günstiger gestaltet werden. Außerdem erlaubt diese Längsträger-Zweiteilung eine erheblich günstigere Abstützung der seitlichen Unterfahrschutzschilde, weil die Halter an einer entsprechend weiten Basis - oben und unten - abgestützt sowie nun auch konstruktiv günstiger als bisher für einen wirksamen Unterfahrschutz, insbesondere mit energieverzehrenden Organen ausbildbar sind. Dadurch ist sichergestellt, daß ein seitlich auf einen Unterfahrschutzschild aufprallender Pkw in diese seitliche Nutzfahrzeug-Knautschzone eintauchen kann und dabei durch den/die energieverzehrenden Energieabsorber weich abgefangen wird. Da Bauteile wie Batteriekästen, Staukästen, Druckluft- und/oder Kraftstoffbehälter und dergleichen vorzugsweise nur im Quererstreckungsbereich der Halter angeordnet sind, ist eine Beschädigung der solchermaßen angeordneten Bauteile zumindest weitestgehend vermeidbar. Wenn der/die Energieabsorber vorzugsweise in Höhe einer Pkw-Stoßstange angeordnet ist/sind, ist bei einem Aufprall eines Pkw eine sehr exakte Kraftwirklinie zwischen den nutzfahrzeugseitig und Pkw-seitig energieverzehrenden Organen gegeben. Die Auswirkungen eines Aufpralles sind somit beidseitig einigermaßen klar definierbar im Hinblick auf die Verformung des Pkw- und nutzfahrzeugseitigen Knautschzonenbereiches.

Auch das dritte erfindungsgemäße Kombinationsmerkmal setzt an einer entsprechenden Neugestaltung der beiden Rahmen-Längsträger an, dahingehend, daß im Bereich des Nutzfahrzeug-Vorderteiles und der dort gegebenen Rahmenlängsträger-Endbereiche eine bauteil- bzw. aggregatfreie oder zumindest bauteilarme mit dann aber längsweich befestigten Bauteilen bzw. Aggregaten ausgestattete vordere Knautschzone gegeben ist. Dadurch ist sichergestellt, daß kein Bauteil bzw. Aggregat bei einer Frontalkollision des Nutzfahrzeuges mit einem Pkw ein starres Hindernis bilden kann. Außerdem ist dadurch, daß jeder der beiden Rahmen-Längsträger an seinem vorderen Endbereich vertikal gegabelt ist, wobei das untere Gabel-Teil vorne über einen oder mehrere in Höhe einer Pkw-Stoßstange angeordnete(n) Energieabsorber den vorderen Stoßfänger trägt, dagegen das obere Gabel-Teil der Gabelung in einer etwas über dem Normal-Niveau einer Pkw-Motorhaube gegebenen Höhe endet, sichergestellt, daß ein frontal aufprallender Pkw in den Frontbereich des Nutzfahrzeuges in die dort gegebene Knautschzone eintauchen kann und dabei vom Stoßfänger über den/die dahinter angeordneten Energieabsorber energieverzehrend abgefangen wird. Dadurch, daß der/die Energieabsorber in Höhe der Pkw-Stoßstange angeordnet ist/sind, ist auch bei einem Frontalaufprall eine sehr exakte Kraftwirklinie zwischen den nutzfahrzeugseitig und Pkw-seitig energieverzehrenden Organen gegeben, was somit die Auswirkungen auch eines frontseitigen Pkw-Aufpralles auf das Nutzfahrzeug einigermaßen klar definierbar macht im Hinblick auf die Verformung des Pkw und des unteren Nutzfahrzeug-Frontbereichs.

Nachstehend ist die erfindungsgemäße Lösung anhand mehrerer in der Zeichnung dargestellter Ausführungsbeispiele näher erläutert. In der Zeichnung zeigen:
- Fig. 1 bis 8: weitgehend schematisiert je eine Ausführungsform der erfindungsgemäßen Lösung in Verbindung mit einem Frontlenker-Lastkraftwagen ohne Auf- und Anbauten in Seitenansicht,
- Fig. 9: einen schematischen Querschnitt durch die Ausführungsformen gemäß Fig. 2, 3 und 4,
- Fig. 10 bis 13: je eine Ausführungsform der Querträger-Verbindungen zwischen den beiden erfindungsgemäß in zwei Teilen aufgelösten Längsträger-Abschnitten,
- Fig. 14 und 15: in Draufsicht schematisiert je eine Heckbereichsvariante für die Fahrzeuge gemäß Fig. 3, 5, 6, 7 und 8,
- Fig. 16 und 17: in Draufsicht schematisiert je eine Heckbereichsvariante für die Fahrzeuge gemäß Fig. 2 und 4,
- Fig. 18: in Vorderansicht eine Ausführungsform der erfindungsgemäßen Rahmenkonstruktion und für Einzelradaufhängung der Vorderräder,
- Fig. 19: den Schnitt B-B aus Fig. 18,
- Fig. 20: den Schnitt A-A aus Fig. 18,
- Fig. 21: die Einzelradaufhängung gemäß Fig. 18 in einer anderen Quer-Hoch-Ebene,
- Fig. 22: einen den Ausführungsformen gemäß Fig. 1, 2, 3, 4, 5 und 18 zugehörigen vorderen Längsträgerabschnitt in Seitenansicht,
- Fig. 23: den vorderen Längsträger-Abschnitt gemäß Fig. 22 in Draufsicht,
- Fig. 24: den Schnitt A-A aus Fig. 22,
- Fig. 25: den Schnitt B-B aus Fig. 22,
- Fig. 26: den Schnitt C-C aus Fig. 22,
- Fig. 27: in Draufsicht die Einzelradaufhängung gemäß Fig. 18 für ein Rad, und
- Fig. 28 bis 30: je eine Ergänzung der erfindungsgemäßen Rahmenkonstruktion für einen seitlichen Unterfahrschutz.

In den Figuren sind gleiche bzw. einander entsprechende Bauteile mit gleichen Bezugszeichen angezogen.

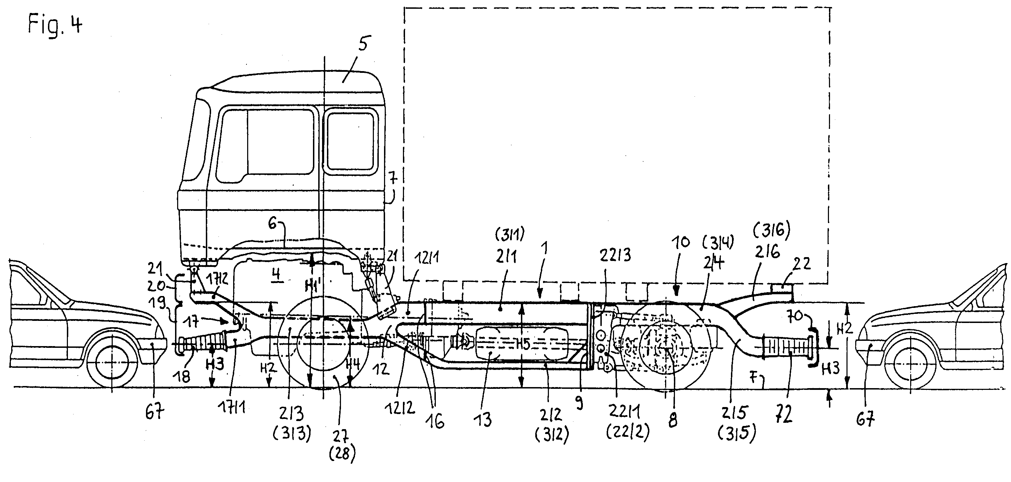

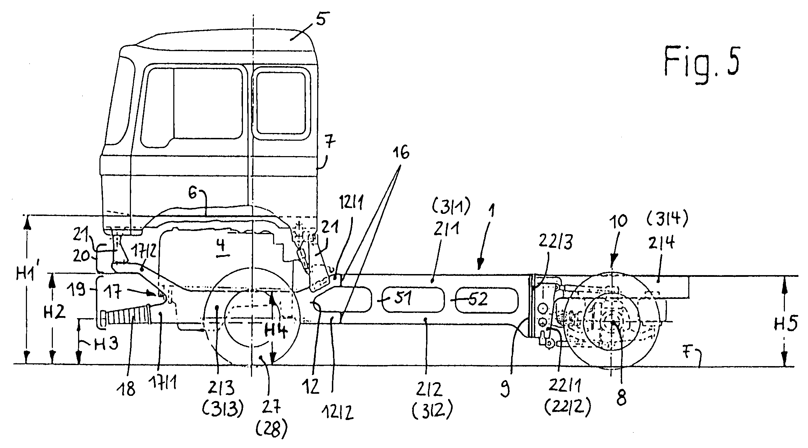

Die erfindungsgemäße Konstruktion kann bei jeder Art von Nutzfahrzeug zur Anwendung kommen, wobei die Basis ein Fahrgestell für einen Lastkraftwagen der Frontlenker- oder Hauber-Bauart ist, das durch die verschiedensten Auf- und Anbauten dem jeweiligen Einsatzzweck entsprechend ergänzbar ist, zum Beispiel mit Pritschenaufbau, Kastenaufbau, Planenaufbau, Sattelkupplung, Feuerwehraufbauten, Müllsammelaufbauten, Tankaufbauten und dergleichen. Ein möglicher Aufbau ist in Fig. 4 gestrichelt dargestellt.

Das Fahrgestell des Nutzfahrzeuges weist einen Rahmen 1 auf, der aus zwei bauartgleichen, über Querträger miteinander verbundenen Längsträgern 2, 3 besteht. Vom Fahrgestell werden ein Antriebsaggregat 4 - eingebaut zwischen den Längsträgern 2, 3-, ein Fahrerhaus 5, dessen Boden mit 6 und Rückwand mit 7 bezeichnet ist, sowie weitere Aggregate/Anbauteile getragen. Die Hinterachse des Fahrzeugs ist insgesamt mit 8 bezeichnet.

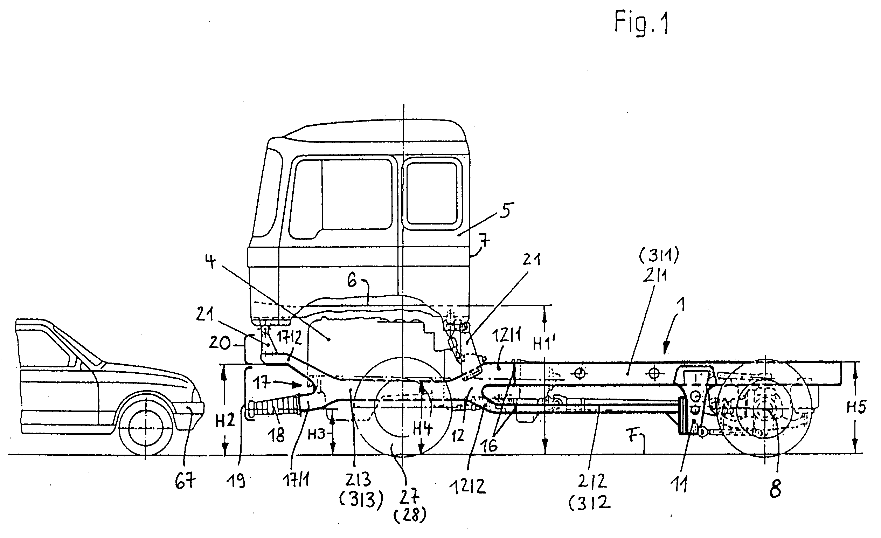

Bei bekannten Nutzfahrzeugen bestimmt der Abstand H5 zwischen Fahrbahn F und durchgehend ebener Oberkante der Rahmen-Längsträger 2, 3 die Einbauhöhe des Antriebsaggregates 4 und damit auch die Anbauhöhe des Fahrerhauses 5. Demgegenüber weist der erfindungsgemäße Rahmen 1 vordere Längsträger-Abschnitte 2/3, 3/3 auf, die - wie gut aus 18 ersichtlich - zur Bildung eines - von vorn gesehen - V-förmigen Einbaubereiches für das Antriebsaggregat 4 in sich von der Vertikalen abweichend partiell schräg gestellt sind (siehe auch Fig. 24, 25, 26). Dadurch sind die vorderen Längsträger-Abschnitte 2/3, 3/3 obergurtseitig weiter voneinander beabstandet als untergurtseitig, was an sich schon einen tieferen Einbau des Antriebsaggregates 4 und damit einhergehend auch einen entsprechend abgesenkten Anbau des Fahrerhauses 5 am Rahmen 1 ermöglicht. Eine noch größere Absenkung des Antriebsaggregates 4 und damit auch des Fahrerhauses 5 ist jedoch dadurch gegeben, daß der Rahmen 1 mit seinen vorderen, im Bereich des Antriebsaggregates 4 und Fahrerhauses 5 gegebenen Längsträger-Abschnitten 2/3, 3/3 auch noch zumindest partiell gegenüber der im hinteren Fahrgestell-Bereich gegebenen Rahmen-Höhe H5 abgesenkt ist, und zwar auf ein Höhen-Niveau H4, das 0,6 - 0,9 H5 beträgt.Dadurch ist das Antriebsaggregat 4 um ein entsprechendes Differenzmaß (0,4 - 0,1 H5) tiefer gelegt zwischen den beiden Rahmen-Längsträgern 2, 3 und ebenso das Fahrerhaus 5 um ein entsprechendes Differenzmaß tiefer gesetzt am Rahmen 1 anbaubar, wobei sich dann zwischen Fahrerhaus-Boden 6 und Fahrbahn Fein in Fig. 1 bis 8 mit H1' angegebenes, reduziertes Abstands-Maß ergibt. Beispiele für diese vorteilhafte Tieferlegung von Antriebsaggregat 4 und Fahrerhaus 5 ermöglichende Rahmenkonstruktionen sind in den Fig. 1 bis 8 dargestellt und nachfolgend näher erläutert.

Das Tieferlegen der vorderen Rahmen-Abschnitte 2/3, 3/3 kann dadurch realisiert werden, daß die beiden Rahmen-Längsträger 2, 3 - wie bei den Ausführungsbeispielen gemäß Fig. 1 bis 6 - beginnend etwa im Bereich der Fahrerhaus-Rückwand 7 und ausgehend von der im hinteren Fahrgestellbereich gegebenen Rahmen-Höhe H5 schräg nach unten gezogen sind und sich dann zumindest abschnittsweise auf dem tieferen Höhen-Niveau H4 verlaufend als abgesenkte Längsträger-Abschnitte 2/3, 3/3 nach vorne erstrecken.

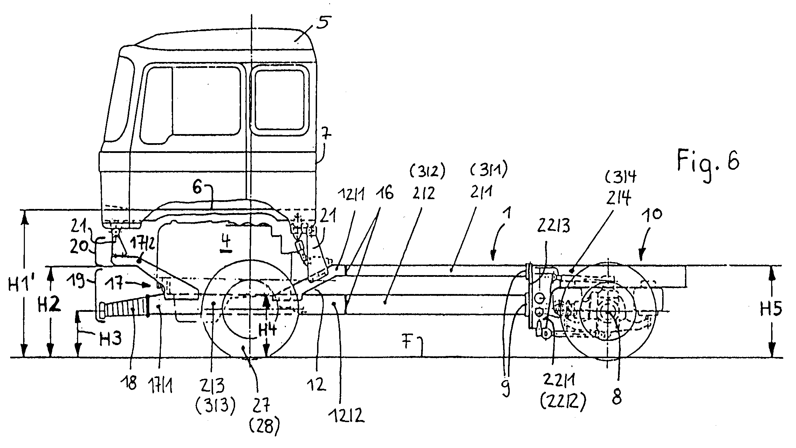

Das Nach-unten-ziehen der beiden Rahmen-Längsträger 2, 3 kann durch entsprechendes Abkröpfen derselben (siehe Fig. 1 bis 5) oder durch Einschweißen eines schrägen Trägerteiles zwischen höher und tiefer liegendem Längsträger-Abschnitt (siehe Fig. 6) realisiert sein, wird aber in diesen Fällen generell in Verbindung mit der weiteren erfindungsgemäßen Längsträger-Gestaltung realisiert. Hierbei ist generell jeder der beiden Längsträger 2, 3 etwa ab der Fahrerhaus-Rückwand 7 in ein oberes Längsträgerteil 2/1, 3/1 und ein hierzu im wesentlichen parallel verlaufendes unteres Längsträger-Teil 2/2, 3/2 aufgelöst. Dabei können die beiden Teile eines jeden Längsträgers 2, 3 jeweils entweder auf gleichen Querschnitt und gleiche Querschnitts-Höhe oder unterschiedlichen Querschnitt und unterschiedliche Querschnitts-Höhe ausgelegt sein, wobei in letzterem Fall das querschnittsgrößere und querschnittshöhere Teil das obere oder das untere Teil des jeweiligen Längsträgers 2, 3 sein kann.

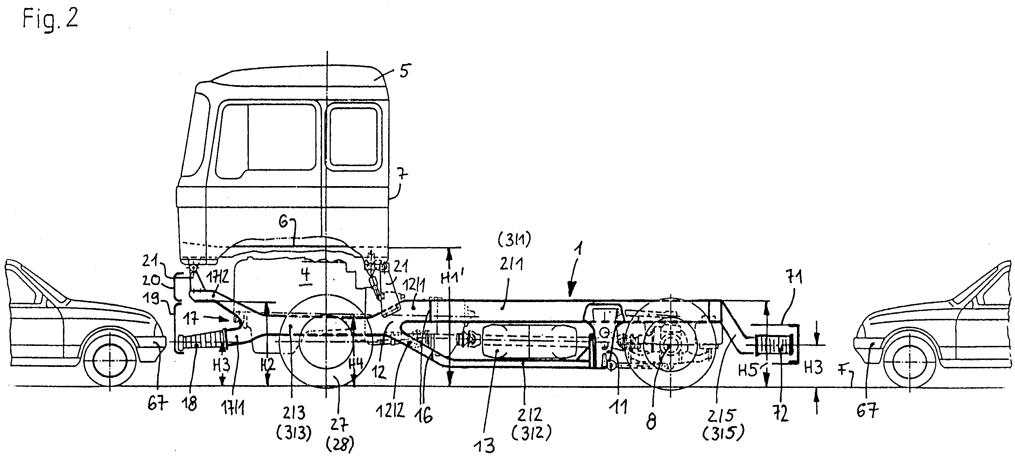

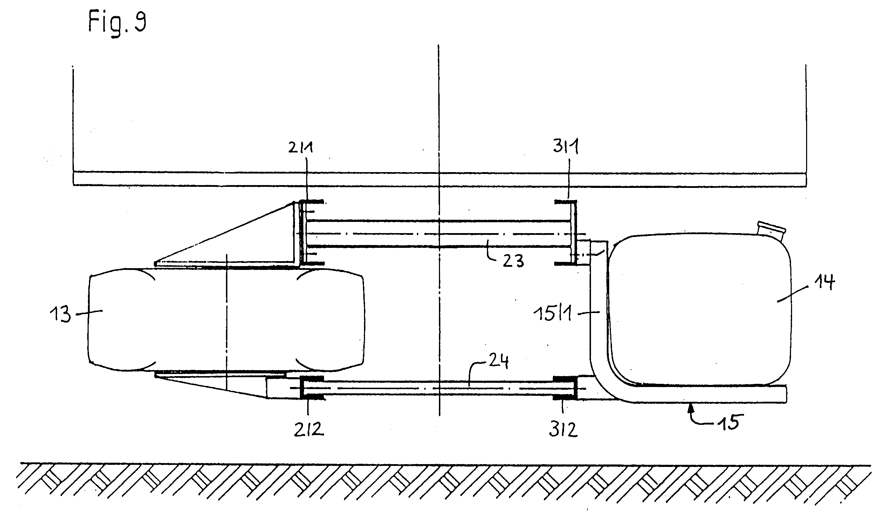

Bei den Ausführungsformen gemäß Fig. 1 bis 6 verlaufen die jeweils beiden Längsträger-Teile 2/1, 2/2 bzw. 3/1, 3/2 jeweils mit größerem Abstand im wesentlichen parallel zueinander. In diesen Fällen ist jeder der beiden Längsträger 2, 3 am hinteren Ende seines tiefer gelegten vorderen Abschnittes 2/3, 3/3 etwa im Bereich der Fahrerhaus-Rückwand 7 mit einer Vertikal-Gabelung 12 versehen, wobei sich am jeweiligen, den schräg nach unten gehenden Abschnitt des jeweiligen Längsträgers 2, 3 enthaltenden oberen Gabel-Teil 12/1 auf Rahmen-Höhe H5 das obere Teil 2/1 bzw. 3/1 und am jeweils unteren Gabel-Teil 12/2 das untere Träger-Teil 2/2 bzw. 3/2 des jeweiligen Längsträgers 2, 3 anschließt. Bei den Ausführungsbeispielen gemäß Fig. 5 und 6 sind die Unterkanten des jeweils tiefer gelegten vorderen Längsträger-Abschnittes 2/3 bzw. 3/3, des zugehörigen unteren Gabel-Teils 12/2 und des anschließenden unteren Längsträger-Teils 2/2 bzw. 3/2 in einer Ebene verlaufend angeordnet. Bei den Ausführungsformen gemäß Fig. 1 bis 4 dagegen verlaufen die Oberkanten der jeweils oberen Längsträger-Teile 2/1, 3/1 in einer von der Oberkante des tiefer gelegten vorderen Längsträger-Abschnittes 2/3 bzw. 3/3 nach oben beabstandeten Ebene und die Unterkanten der unteren Längsträger-Teile 2/2 bzw. 3/2 in einer Ebene, die tiefer liegt als die die Unterkante des tiefer gelegten vorderen Längsträger-Abschnittes 2/3 bzw. 3/3 einschließende Ebene. Im Fall der Ausführungsbeispiele gemäß Fig. 2 bis 4 ist das untere Teil 2/2 bzw. 3/2 eines Längsträgers 2, 3 soweit nach unten verlegt, daß zwischen beiden Längsträger-Teilen 2/1, 2/2 bzw. 3/1, 3/2 ein Ersatzrad 13 quer und/oder Kraftstofftanks, Druckluftvorratsbehälter, Batteriekästen, Staukästen und dergleichen einbaubar sind. Wie aus Fig. 9 ersichtlich, ist aufgrund der Zweiteilung der Rahmen-Längsträger 2, 3 auch eine günstigere Lagerung von Bauteilen 14 wie Kraftstoff- bzw. Druckluftbehältern, Batteriekästen, Staukästen und dergleichen außen am Rahmen möglich, weil die hierfür vorgesehenen Befestigungsorgane, z.B. Winkelhalter 15 mit ihrem Anschlußschenkel 15/1 an beiden Träger-Teilen 2/1, 2/2 bzw. 3/1, 3/2 abgestützt anliegend befestigbar sind. Im zweigeteilten mittleren Längsträger-Bereich können die jeweils beiden Teile 2/1, 2/2 bzw. 3/1, 3/2 - wie beispielsweise aus Fig. 5 ersichtlich - zur Erhöhung der Rahmenfestigkeit über Streben 51, 52 miteinander verbunden sein. Dabei kann dieser Abschnitt des Rahmens entweder durch eine Schweißkonstruktion oder ein Blechpreßteil (wie in Fig. 5 dargestellt) realisiert sein.

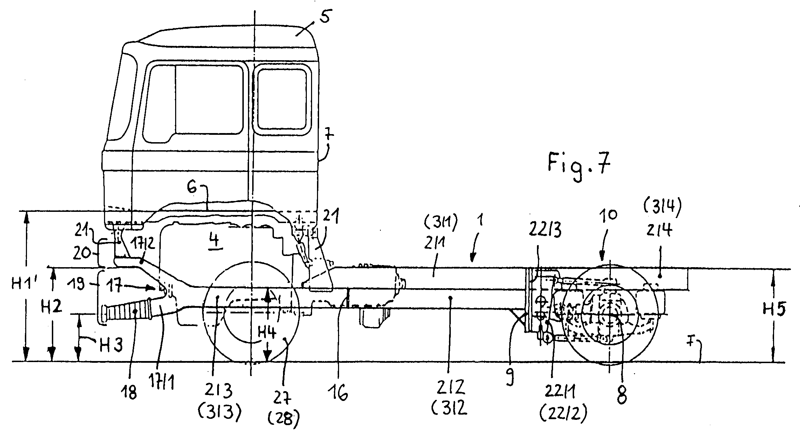

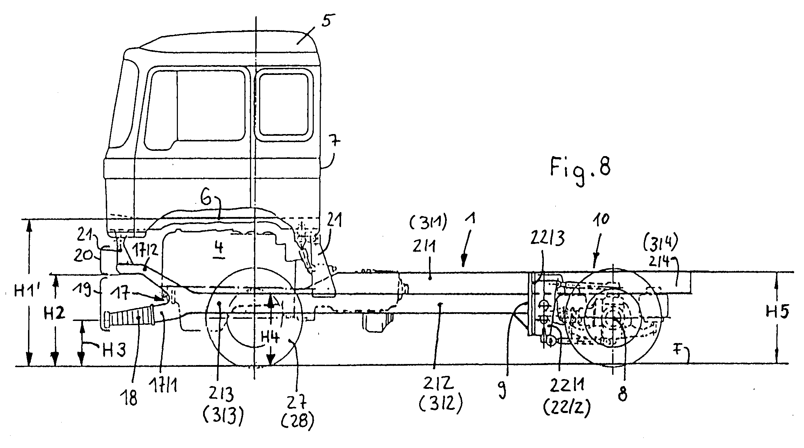

Im Fall gemäß Fig. 6 verläuft das jeweils untere Teil 2/2, 3/2 jedes Längsträgers 2, 3 in gerader Verlängerung zum abgesenkten vorderen Abschnitt 2/3, 3/3 desselben, d.h. die Oberkanten fluchten auf dem tiefer gelegten Höhen-Niveau H4. Bei den Fällen gemäß Fig. 7 und 8 sind die beiden Teile 2/1, 2/2 bzw. 3/1, 3/2 jedes Längsträgers 2, 3 jeweils ohne Abstand aneinander anliegend gegeben, wobei das jeweils obere Längsträger-Teil 2/1, 3/1 etwa in Höhe der Fahrerhaus-Rückwand 7 beginnt. Im Fall gemäß Fig. 7 überlappt das obere Längsträger-Teil 2/1, 3/1 das hintere Ende des zugehörigen vorderen abgesenkten Längsträger-Abschnittes 2/3, 3/3 und ist im Überlappungsbereich an letzterem befestigt. Das zugehörige untere Längsträger-Teil 2/2, 3/2 ist im Fall gemäß Fig. 7 in gerader Verlängerung mit dem abgesenkten vorderen Längsträger-Abschnitt 2/3, 3/3 angeordnet und an dessen hinterem Ende angeschlossen. Im Fall gemäß Fig. 8 dagegen ist das untere Längsträger-Teil 2/2, 3/2 in gerader Verlängerung des abgesenkten vorderen Längsträger-Abschnittes 2/3, 3/3 angeordnet einstückig mit diesem ausgebildet. Das zugehörige obere Längsträger-Teil 2/1, 3/1 ist oben aufgesetzt und befestigt.

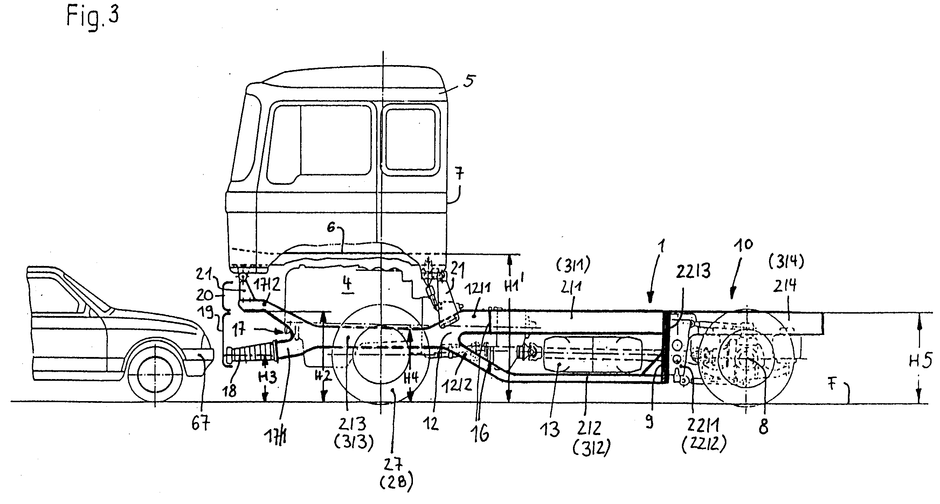

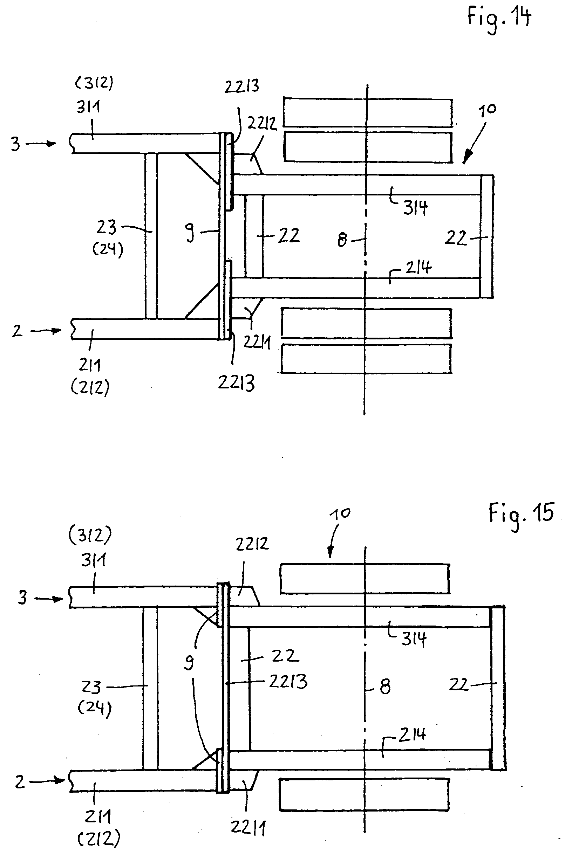

Grundsätzlich endet der jeweils untere Abschnitt 2/2, 3/2 jedes aufgeteilten Längsträgers 2, 3 hinten vor der (ersten, vorderen) Hinterachse 8. Das jeweils obere Teil 2/1, 3/1 jedes Längsträgers 2, 3 kann sich dagegen entweder über die Hinterachsanordnung hinaus (siehe Fig. 1 und 2) oder nur bis vor die (erste, vordere) Hinterachse 8 erstrecken (siehe Fig. 3 bis 8) und dann dort mit Anschlußorganen 9, z.B. eine Platte oder Flansche versehen sowie über diese mit dem Fahrgestell-Heck 10 verbunden sein. In diesen Fällen (siehe auch Fig. 14 bis 17) ist das Fahrgestell-Heck 10, bestehend aus Rahmenendstück und Hinterachse(n) 8 als Modul zumindest weitestgehend vormontierbar und dann am davor gegebenen Fahrgestellabschnitt über Schraub- oder Nietverbindungen befestigbar. Dieses ermöglicht - wie ein Vergleich zwischen Fig. 14 und 15 oder 16 und 17 zeigt - im Fahrgestell-Heck 10 unterschiedliche Rahmen-Längen und -Breiten und somit eine bestmögliche Anpassung an unterschiedliche Nutzfahrzeug-Typen bzw. - Einsatzzwecke. Dabei ist das Rahmenendstück durch sich an den oberen Längsträger-Teilen 2/1, 3/1 in deren Höhe anschließende und durch wenigstens einen Querträger 22 verbundene Längsträger-Teile 2/4 bzw. 3/4 gebildet. Für die Anlenkung von Hinterachsaufhängungsorganen sind dabei außen an den Längsträger-Teilen 2/4, 3/4 jeweils Lagerschilde 22/1, 22/2 vorgesehen. Frontseitig der letzteren sowie der Längsträger-Teile 2/4, 3/4 ist verbunden mit diesen Teilen eine Anschlußplatte bzw. sind Anschlußflansche 22/3 gegeben, die bei der Verbindung des vormontierten Fahrgestell-Hecks 10 an den endseitig der Längsträgerteile 2/1, 2/2, 3/1, 3/2 gegebenen Anschlußorganen 9 zur Anlage kommt/kommen und über Schraub- oder Nietverbindungen aneinander angeschlossen werden.

In den Fällen gemäß Fig. 1 und 2, bei denen das jeweils obere Teil 2/1, 3/1 jedes zweigeteilten Längsträgers 2, 3 über die Hinterachsanordnung hinaus bis zum Fahrzeugheck verlängert ist, sind die beiden Teile 2/1, 2/2 bzw. 3/1, 3/2 jedes Rahmen-Längsträgers 2, 3 über jeweils einen Lagerschild 11 miteinander verbunden, der gleichzeitig als Lagerorgan für Anlenkungsorgane der Hinterachse(n) 8 dient.

Bei den Ausführungsbeispielen gemäß den Fig. 1 bis 6 sind die beiden Teile 2/1, 2/2 bzw. 3/1, 3/2 jedes Rahmen-Längsträgers 2, 3 mit den Gabelteilen 12/1, 12/2 am vorderen Längsträger-Abschnitt 2/3, 3/3 über Schraub- oder Nietverbindungen verbunden, die entsprechenden Schnittstellen sind in der Zeichnung mit 16 bezeichnet. Dies erlaubt es, daß das Fahrgestell-Vorderteil mit Fahrerhaus 5, Antriebsaggregat 4 und sonstigen Nebenaggregaten/Anbauteilen als Modul unabhängig vom restlichen Fahrgestell vormontierbar und erst dann mit letzterem zusammenbaubar ist.

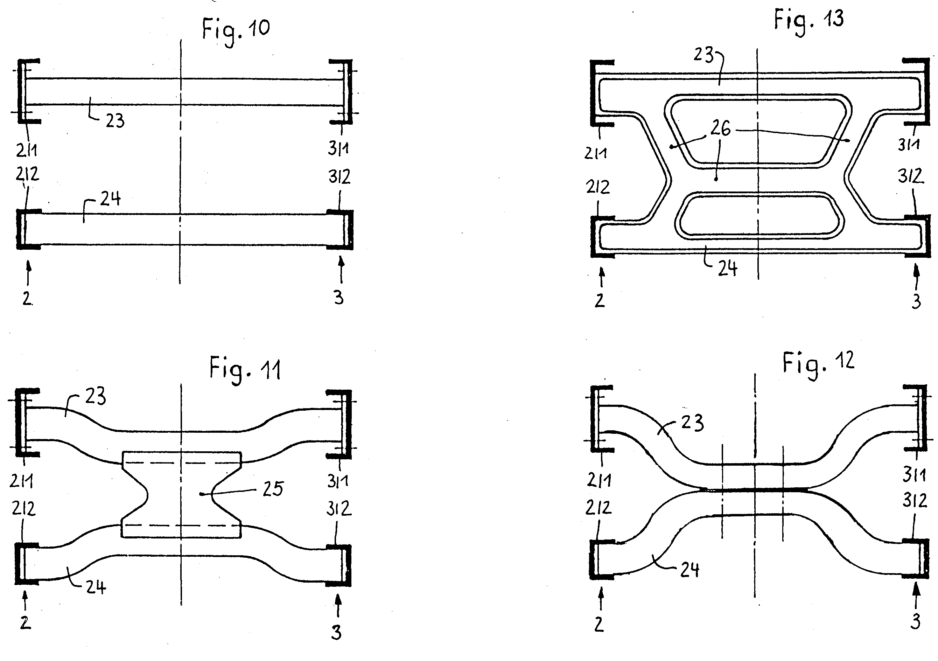

Die beiden Längsträger 2, 3 sind generell über an geeigneten Stellen angebrachte Querträger miteinander verbunden. Die Figuren 10 bis 13 zeigen verschiedene Querträgerkonstruktionen für die Verbindung der Längsträger 2, 3 in deren zweigeteiltem mittleren Bereich auf. Dabei können gerade oder gekröpfte, gegebenenfalls endseitig mit Anschlußflanschen versehene Querträger 23, 24 vorgesehen sein, die nicht (siehe Fig. 10) oder über ein Zwischenstück 25 (siehe Fig. 11) oder mittig direkt (siehe Fig. 12) miteinander verbunden sind und an denen die Längsträger-Teile jeweils endseitig angeschraubt, angenietet oder angeschweißt sind. Bei der Ausführungsform gemäß Fig. 13 sind die Querträger 23, 24 zusammen mit diese verbindenden Verstrebungen 26 durch ein Blechpreßteil realisiert, an das die Längsträger-Teile entweder angeschraubt, angenietet oder angeschweißt sind.

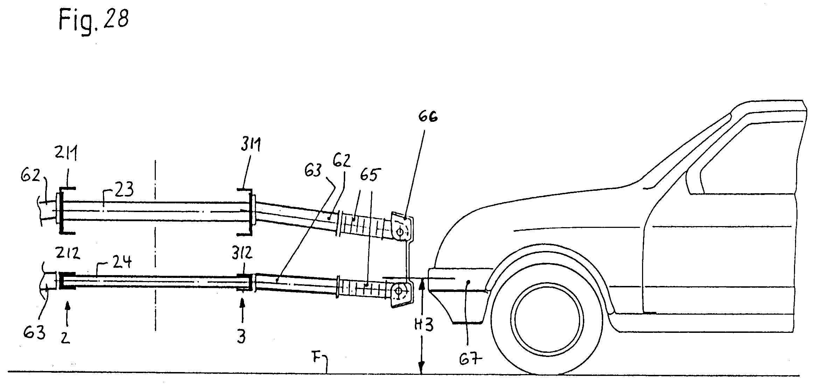

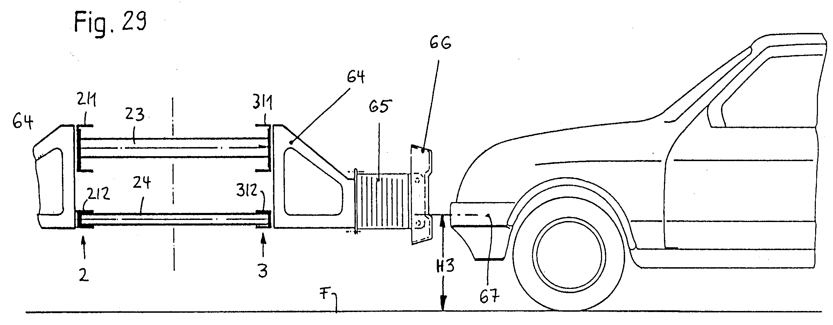

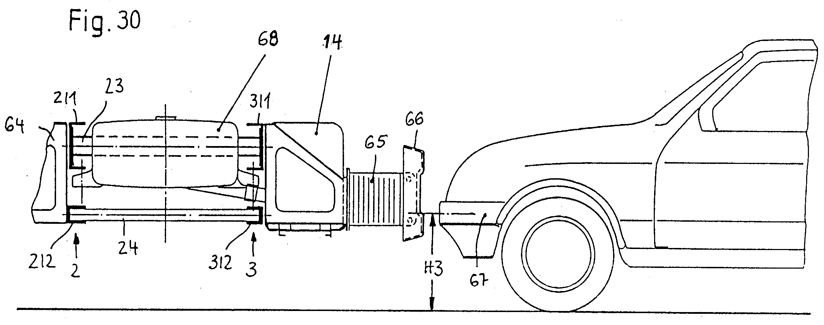

Der erfindungsgemäßen Auflösung der beiden Rahmen-Längsträger 2, 3 im Bereich hinter dem Fahrerhaus 5 in je zwei Teile 2/1, 2/2 bzw. 3/1, 3/2 kommt im Hinblick auf den seitlichen Unterfahrschutz insofern große Bedeutung zu, als sich diese hervorragend für eine äußerst günstige Anordnung und Abstützung von dem seitlichen Unterfahrschutz dienenden Organen eignet. Verschiedene Ausführungsbeispiele hierzu sind in den Fig. 28 bis 30 dargestellt. Dabei sind an beiden Teilen 2/1, 2/2 bzw. 3/1, 3/2 der beiden Rahmen-Längsträger 2, 3 Halter 62, 63 (Fig. 28) bzw. 64 (Fig. 29, 30) angebracht, die über Energieabsorber 65 seitliche Unterfahrschutzschilde 66 tragen. Die Halter 62, 63 sind im Fall gemäß Fig. 28 stabförmig, in sich stabil ausgebildet und ragen seitlich von den sie tragenden Längsträger-Teilen 2/1, 2/2 bzw. 3/1, 3/2 ab. Bei der Ausführungsform gemäß Fig. 29 und 30 sind die Halter 64 durch einen geschlossenen, in sich stabilen Rahmen gebildet, der mit seiner Basis vertikal an beiden Teilen 2/1, 2/2 bzw. 3/1, 3/2 eines Längsträgers 2, 3 abgestützt und befestigt ist. Die Energieabsorber 65 sind zumindest teilweise in Höhe H3 einer Pkw-Stoßstange 67 angeordnet und machen es daher möglich, daß ein Seitenaufprall eines Pkw, wie in den Fig. 28 bis 30 dargestellt, besonders günstig, weil energieverzehrend, abfangbar ist. Durch eine entsprechende Ausgestaltung der Halter 62, 63, 64 mit einer seitlich auskragenden Länge, die größer als ebenfalls seitlich an den Längsträger-Teilen 2/1, 2/2 bzw. 3/1, 3/2 befestigte Fahrzeugteile 14 wie Kraftstoff- und/oder Druckluftbehälter, Batteriekästen, Staukästen und dergleichen ist, sind letztere auch bei einem seitlichen Aufprall eines Personenkraftwagens relativ gut gegen etwaige Beschädigungen gesichert.

Im übrigen macht die Zweiteilung der beiden Längsträger 2, 3, wie ebenfalls aus Fig. 30 ersichtlich, eine besonders geschützte Unterbringung von zusätzlichen Fahrzeugteilen 68 wie Kraftstoff- und/oder Druckluftbehältern und dergleichen im Bereich zwischen beiden zweigeteilten Längsträgern 2, 3 möglich.

Die Energieabsorber 65 können in Verbindung mit den Haltern 62, 63, 64 durch jede geeignete Vorrichtung, z.B. Zylinder/Kolben-Konstruktionen, oder durch frontseitig an festen Stäben angeordnetes energieabsorbierendes Material gebildet sein. Dabei kann auch dieses energieabsorbierende Material stabförmig sein, oder sich in Blockform, mehrere Halter miteinander verbindend, ausgebildet und am Unterfahrschutzschild 66 abgestützt angeschlossen sein. Vorzugsweise ist jeder der je Fahrzeugseite vorgesehenen Unterfahrschutzschilde 66 als großflächige, in sich profilierte und auch im Hinblick auf eine aerodynamische günstige Seitenverkleidung des Fahrzeugs ausgebildete Platte realisiert.

Darüber hinaus sind der Rahmen 1 und das Nutzfahrzeug in ihren vorderen Bereichen, bei einem Frontlenker unterhalb des vorderen Teils des Fahrerhauses 5, im Hinblick darauf gestaltet, daß dort eine bauteil- bzw. aggregatfreie oder - sofern dies nicht möglich ist - eine zumindest bauteilarme und dann nur mit längsweich (in Längsrichtung nachgiebig) am Rahmen befestigten Bauteilen bzw. Aggregaten ausgestattete Knautschzone gegeben ist. In deren Bereich kommen erfindungsgemäßen vorderen Vertikalgabelungen 17 an den vorderen Längsträger-Abschnitten 2/3, 3/3 große Bedeutung zu, denn an deren unteren Gabel-Teilen 17/1 ist vorne über einen oder mehrere in Höhe H3 einer Pkw-Stoßstange 67 (siehe Fig. 1 bis 4) angeordnete(n), in Rahmen-Längsrichtung nachgiebige(n) Energieabsorber 18 ein Stoßfänger 19 abgestützt. Das obere Gabel-Teil 17/2 dagegen ist als Träger und für die Befestigung von Fahrzeugteilen bzw. -aggregaten, wie Fahrerhaus 5 (über Lagerböcke 21), Lenkgetriebe, Kühler, einem zweiten (oberen) Stoßfänger bzw. einer Frontverblendung 20 und dergleichen herangezogen. Außerdem enden die oberen Gabelteile 17/2 generell in einer etwas über dem Normalniveau einer Pkw-Motorhaube gegebenen Höhe H2 und sind unterseitig so gestaltet, daß ein Pkw bei einer Kollision unter Längsverschiebung des Stoßfängers 19 in diese so gegebene vordere Nutzfahrzeug-Knautschzone eintauchen kann. Dabei kann die Unterkante jedes der beiden oberen Gabel-Teile 17/2 in Längsrichtung (wie dargestellt) beispielsweise wenigstens soweit parallel zur Fahrbahn verlaufen, daß bei einer Kollision mit einem Pkw durch diesen eine Längs-Verschiebung des Stoßfängers 19 bis zur Enddeformation des/der Energieabsorber 18 gewährleistet ist. Die vorderen Enden der unteren Gabel-Teile 17/1 können durch eine Quertraverse miteinander verbunden sein, die einerseits zur Erhöhung der Rahmen-Stabilität und andrerseits auch zur Verbesserung der Anschlußmöglichkeit für den/die Energieabsorber 18 dient. Der energieabsorbierende vordere Knautschzonen-Bereich des Nutzfahrzeuges kann auf verschiedene Weise realisiert sein. Beispielsweise kann der Stoßfänger 19 innen eine Querverstrebung aufweisen, an der der/die Energieabsorber 18 vorne abgestützt angeschlossen sind. Ferner ist es möglich, am jeweils unteren Gabel-Teil 17/1 einen eigenen Energieabsorber 18 anzuordnen. Alternativ hierzu ist es auch möglich, einen sich zumindest annähernd über die gesamte Länge/Fahrzeugbreite des Stoßfängers 19 hinter diesem erstreckenden Energieabsorber 18 in Blockform vorzusehen, der an den vorderen Enden der unteren Gabel-Teile 17/1 befestigt ist. Schließlich ist es auch möglich, daß der Stoßfänger 19 selbst als Energieabsorber ausgebildet oder als mit dem/den Energieabsor(n) vorgefertigtes Bauteil an den vorderen Enden der unteren Gabelteile 17/1 bzw. der dort gegebenen Quertraverse befestigt ist. Zur Realisierung des/der Energieabsorber 18 ist jedes Material oder jede Vorrichtung denkbar, mit der die Energie eines frontal am Stoßfänger 19 aufprallenden Pkws, z. B. progressiv über den Weg gesehen verzehrbar ist.

Das - in den dargestellten Beispielen kippbare - Fahrerhaus 5 ist am Rahmen 1 gelagert, über Lagerböcke 21, wobei die vorderen durch die Front-Blende bzw. den zweiten Stoßfänger 20 abgedeckt sind. Dabei sind die vorderen Lagerböcke 21 in Höhenrichtung relativ kurz bauend am vorderen Endbereich des jeweiligen oberen Gabel-Teiles 17/1 eines Rahmen-Längsträgers 2, 3 angeordnet, während die hinteren Lagerböcke 22 jeweils etwa am Gabelungsbereich 12 bzw. Übergangsbereich zwischen nicht abgesenktem und vorderem abgesenkten Längsträger-Abschnitt angeordnet sind.

Der vordere Abschnitt 2/3, 3/3 jedes Längsträgers 2, 3 kann einschließlich der Gabelungen 12, 17 als einstückiges Blechpreßteil oder als Schweißkonstruktion aus vorgefertigten Teilen realisiert werden.

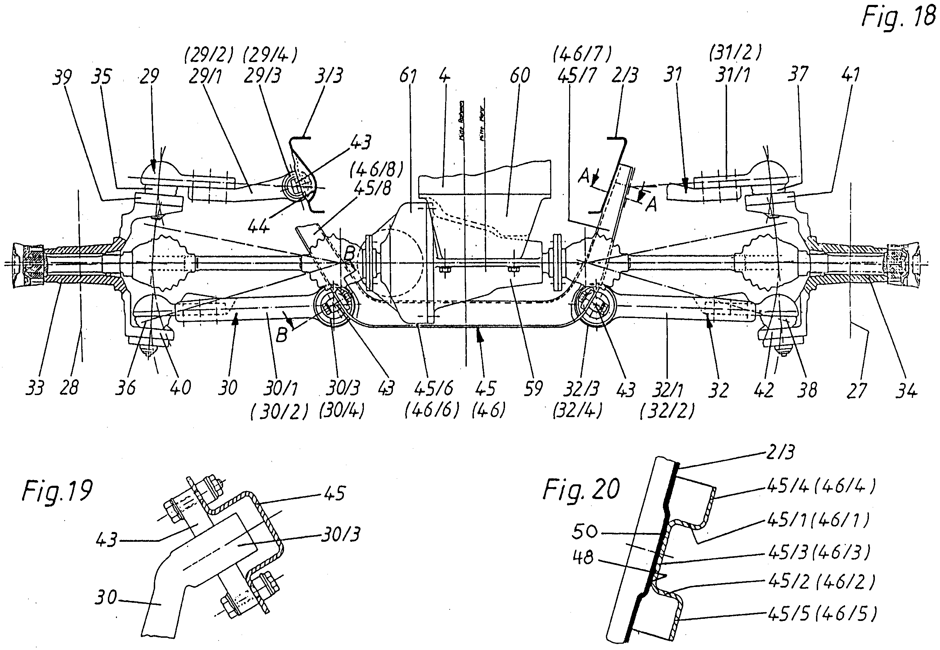

Nachfolgend ist detailliert auf die Ausgestaltung der vorderen Rahmen-Abschnitte 2/3, 3/3 im Hinblick auf eine Einzelradaufhängung für die Vorderräder 27, 28 eingegangen, und zwar unter Bezugnahme auf die Fig. 18 bis 27.

Für die Einzelaufhängung je Vorderrad 27, 28 sind zwei beabstandet übereinander in etwa parallelen Querebenen des Fahrzeuges wirkende Dreiecksquerlenker 29, 30 bzw. 31, 32 vorgesehen. Diese Dreiecksquerlenker sind innenendes jeweils am Rahmen 1 und außenendes, dort oben bzw. unten am Achsschenkel 33 bzw. 34 des jeweiligen Rades 27, 28 über ein Anschlußorgan 35, 36 bzw. 37, 38 angelenkt. Diese Anschlußorgane sind vorzugsweise jeweils von oben her auf einem entsprechenden Plateau 39, 40 bzw. 41, 42 des Achsschenkels 33 bzw. 34 aufgesetzt und an diesem befestigt. Die beiden Schenkel eines jeden Dreiecksquerlenkers sind mit 29/1, 29/2 bzw. 30/1, 30/2 bzw. 31/1, 31/2 bzw. 32/1, 32/2 bezeichnet.

An den inneren Enden der Schenkel der Dreiecksquerlenker 29, 30 bzw. 31, 32 sind für deren Anlenkung Lageraugen 29/3, 29/4, 30/3, 30/4, 31/3, 31/4, 32/3, 32/4 gegeben, die sich quer zur Fahrzeug-Längsachse erstrecken, jeweils zueinander planparallele Seitenflächen sowie durchgehende Querbohrungen aufweisen, die jeweils von einem parallel zur Fahrzeug-Längsachse verlaufenden Pratzengelenk 43 durchdrungen werden. Wie deutlich aus Fig. 19 ersichtlich, besteht jedes dieser Pratzengelenke aus einem die Querbohrung des jeweiligen Lagerauges durchdringenden Mittelabschnitt 43/1 und endseitigen Befestigungsaugen 43/2, 43/3 mit vorne und hinten planparallelen Anlageflächen und quer durchgehenden Bohrungen, wobei die Pratze mit ihren inneren Anlageflächen an der jeweiligen Anlagefläche des Rahmens anliegt und im Bereich derselben über eine eine dort gegebene Bohrung und die Querbohrung im Pratzenlagerauge durchdringende Verschraubung 43/4, 43/5 befestigt ist.

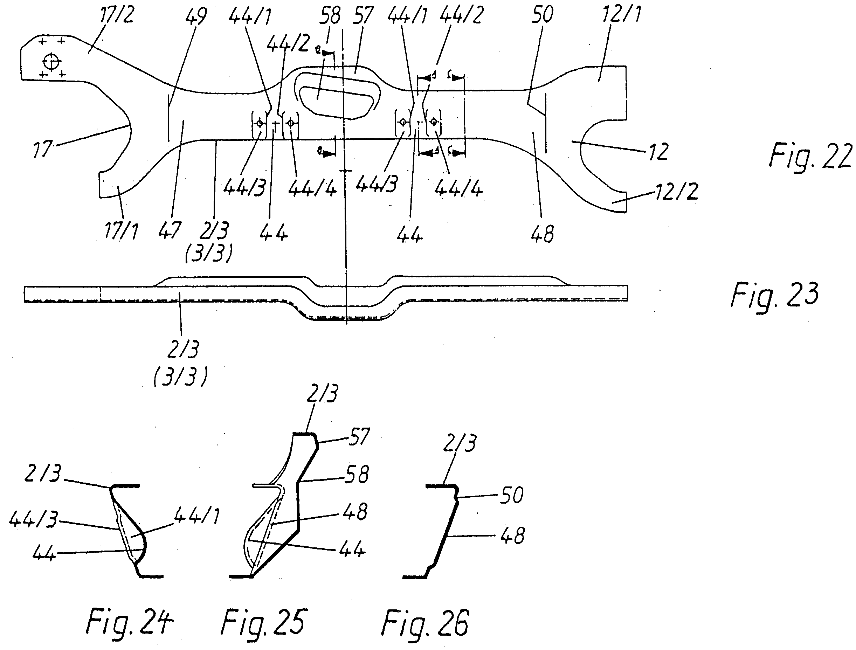

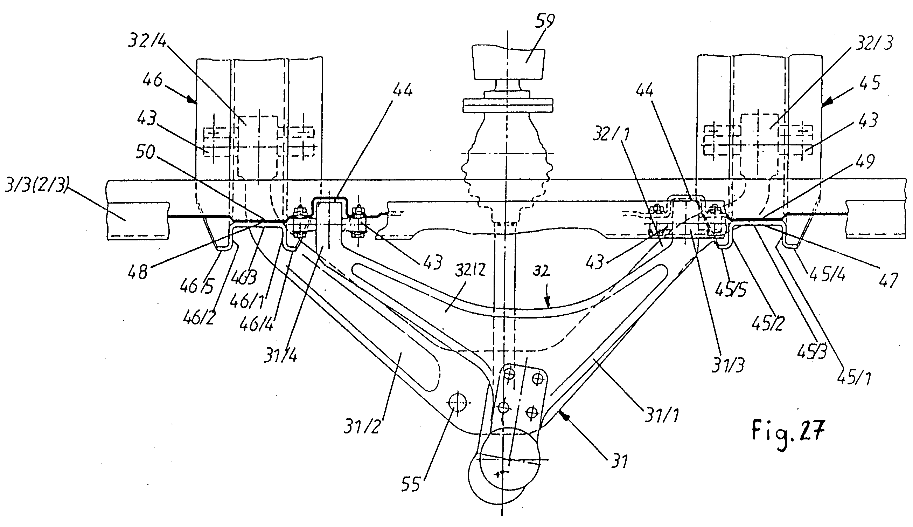

Wie desweiteren gut aus Fig. 18 und 27 ersichtlich, sind die beiden Schenkel der unteren Dreiecksquerlenker 30, 32 jeweils länger als die Schenkel der oberen Dreiecksquerlenker 29, 31. Außerdem ist der Abstand der Lageraugen der unteren Dreiecksquerlenker 30, 32 größer als jener der Lageraugen der oberen Dreiecksquerlenker 29, 31. Jeder obere Dreiecksquerlenker 29, 31 ragt mit seinen innenendes gegebenen Lageraugen 29/3, 29/4 bzw. 31/3, 31/4 in hierfür außen am vorderen Längsträger-Abschnitt 2/3, 3/3 gegebene Vertiefungen 44 (siehe insbes. Fig. 24) hinein, deren Seitenflächen 44/1, 44/2 (siehe Fig. 22) einen größeren lichten Abstand als die Seitenflächen der Lageraugen der oberen Dreiecksquerlenker 29, 31 haben.

Die Vertiefungen 44 können, wie aus Fig. 18, 22 und 24 ersichtlich, durch außermittig von außen her in einen schräg gestellten Steg-Abschnitt des vorderen Längsträger-Abschnittes 2/3, 3/3 nahe zum steifen Eckbereich mit dem Untergurt hingerückt eingepreßte Taschen gebildet sein. Die beiderseits einer solchen Tasche 44 an besagtem Steg-Abschnitt gegebenen Auflagen 44/3, 44/4 für das zugehörige Pratzengelenk 43 sind - wie gut aus Fig. 22 und 24 ersichtlich - außen an im Steg nach außen gepreßten Vorsprüngen entsprechend kalibriert. Alternativ hierzu können die Vertiefungen 44 für die Aufnahme der Lageraugen 29/3, 29/4; 31/3, 31/4 der oberen Dreiecksquerlenker 29, 31 auch jeweils durch den Freiraum zwischen zwei am Steg jedes vorderen Längsträger-Abschnittes 2/3, 3/3 entsprechend weit von innen nach außen herausgepreßten Vorsprüngen gegeben sein, an denen außen die Anlageflächen 44/3, 44/4 für das jeweils zugehörige Pratzengelenk 43 entsprechend kalibriert sind.

Für die rahmenseitige Anlenkung der unteren Dreiecksquerlenker 30, 32 sind - wie gut aus Fig. 18 und 27 ersichtlich - zwei die beiden vorderen Längsträger-Abschnitte 2/3, 3/3 verbindende, von vorne gesehen etwa V-förmig nach unten gezogene Querträger 45, 46 vorgesehen. Jeder dieser beiden V-förmig heruntergezogenen Querträger 45, 46 hat einen offenen U-T-Querschnitt, wobei - wie aus Fig. 20 ersichtlich - die Basis durch ein nach außen offenes U-Profil gebildet ist, an dessen beiden Seitenschenkeln 45/1, 45/2 bzw. 46/1, 46/2 sich außen abragende, zum U-Profil-Boden 45/3 bzw. 46/3 parallele, der Auflage und dem Anschluß der Pratzengelenke 43 der unteren Dreiecksquerlenker 30, 32 dienende T-Stege 45/4, 45/5 bzw. 46/4, 46/5 anschließen. Von vorne (siehe Fig. 18) gesehen weist dabei jeder der beiden Querträger 45, 46 folgende Form auf: An tiefster Stelle ist ein horizontal verlaufender Abschnitt 45/6 bzw. 46/6 mit einer gegenüber der Breite des Antriebsaggregates 4 größeren Länge gegeben, an dessen beiden Enden schräg nach oben außen gerichtete Schenkel 45/7, 45/8 bzw. 46/7, 46/8 abgehen. Deren obere Endbereiche sind gegenüber den unteren etwa steiler gestellt und bilden jene Abschnitte, mit denen der jeweilige Querträger 45, 46 außen mit seinem U-Profil-Boden 45/3 bzw. 46/3 an den vorderen Längsträger-Abschnitten 2/3, 3/3 außen anliegend befestigt - angeschraubt, angenietet oder angeschweißt - ist. Die vorderen Längsträger-Abschnitte 2/3, 3/3 sind hierzu an ihren Stegen - wie aus Fig. 18 und 26 ersichtlich - mit entsprechend angepaßten schrägen Anlageflächen 47, 48 ausgestattet, die an Ein- oder Ausbuchtungen 49, 50 des Profil-Steges (siehe Fig. 20 und 26) gegeben sein können.

Die unteren Dreiecksquerlenker 30, 32 ragen mit ihren Lageraugen 30/3, 30/4 bzw. 32/3, 32/4 jeweils in den offenen U-Profil-Raum der beiden Querträger 45, 46 jeweils am unteren Ende von deren schrägen Schenkeln in Höhe des Horizontalabschnittes hinein (siehe Fig. 19). Die Anschlußstellen für die zugehörigen Pratzengelenke 43 sind dabei am unteren Ende der schrägen Schenkel 45/7, 45/8 bzw. 46/7, 46/8 an schrägen T-Steg-Abschnitten gegeben, was gut aus Fig. 18 ersichtlich ist. Die lichte Weite des offenen U-Profiles der beiden Querträger, gegeben durch dessen Seitenwände 45/1, 45/2 bzw. 46/1, 46/2, ist hierfür (wie aus Fig. 19 ersichtlich) etwas größer als der Abstand der Seitenflächen am jeweiligen Lagerauge 30/3, 30/4 bzw. 32/3, 32/4. Zusätzlich kann der in Fahrtrichtung vorwärts gesehen vordere Querträger 45 über (nicht dargestellte) Längsstreben stabilisiert sein, die vorne am jeweils unteren Gabel-Teil 17/2 der Vertikalgabelung 17 und hinten am Horizontalabschnitt 45/6 des Querträgers 45 abgestützt angelenkt werden.

Die beiden Querträger 45, 46 können durch jeweils ein einstückiges Blechpreßteil oder aus jeweils zwei zur Fahrzeuglängsachse spiegelsymmetrischen, längs der Symmetrielinie zusammengeschweißten Blechpreßteilen realisiert sein.

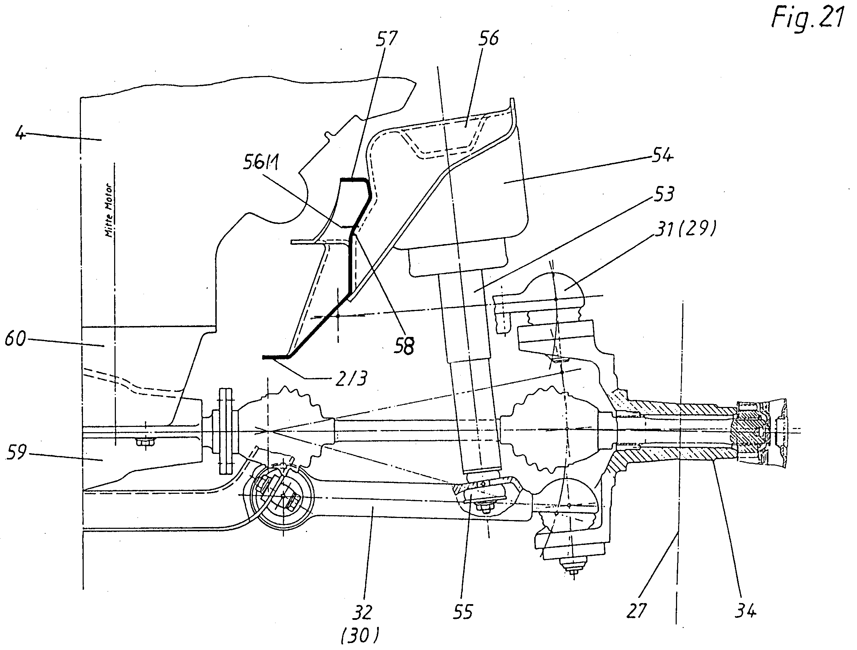

Die vorbeschriebene Art der Einzelradaufhängung eignet sich sowohl für nichtangetriebene als auch angetriebene gelenkte Vorderräder 27, 28. Außerdem erlaubt diese Art der Einzelradaufhängung auch eine besonders günstige Anordnung von Federungsorganen insbesondere einer Luftfederung, auf die nachfolgend noch näher eingegangen ist. Wie gut aus Fig. 21 ersichtlich, kommt für die Realisierung einer Luftfederung im Vorderachsbereich je Vorderrad 27, 28 eine mit einem Stoßdämpfer 53 kombinierte Luftfeder 54 zur Anwendung, wobei die Luftfeder 54 oben mit dem Stoßdämpfer 53 vereinigt ist, der an seinem unteren Ende am jeweils unteren (gegebenenfalls auch oberen) Dreiecksquerlenker 30 bzw. 32 am Übergangsbereich von dessen beiden Schenkeln abgestützt ist. Die diesbezüglichen Anschlußstellen sind in Fig. 21 und 27 mit 55 angezogen. Die Luftfeder 54 ist oben an einem Federbock 56 abgestützt und befestigt, der in spezieller Weise am vorderen Längsträger-Abschnitt 2/3 bzw. 3/3 angeschlossen ist. Für die Anbindung des Federbockes 56 ist dabei -wie aus Fig. 21, 22 und insbesondere 25 ersichtlich - jeder vordere Längsträger-Abschnitt 2/3, 3/3 an seinem Steg örtlich zwischen den Taschen 44 für die Anlenkung der oberen Dreiecksquerlenker 29, 31 nach oben und außen gezogen, siehe den diesbezüglichen Abschnitt 57, und mit einer Einbuchtung 58 versehen. An der Einbuchtung 58 und dem hochgezogenen Abschnitt 57 ist der Federbock 56 mit seinem formmäßig entsprechend angepaßten Anschlußbereich 56/1 angesetzt und befestigt, insbesondere angeschweißt.

Was die Anordnung des Antriebsaggregates 4 anbelangt, so ist dieses aufgrund der erfindungsgemäßen Rahmenkonstruktion bei einem Frontlenker-Lastkraftwagen tiefergelegt unterhalb des ebenfalls abgesenkten Fahrerhauses 5 im Bereich der beiden ihn unterquerenden Querträger 45, 46 gegeben und vorzugsweise außermittig zur Fahrzeug-Längsachse soweit wie möglich zu einem der beiden vorderen Längsträger-Abschnitte 2/3, 3/3 hingerückt angeordnet. Im Falle angetriebener Vorderräder 27, 28, wie in den Fig. 18, 21 und 27 dargestellt, ist das zugehörige Achsmittengetriebe (Ausgleichsdifferential 59) direkt vorn am Antriebsaggregat 4 unterhalb der Ölwanne 60 und vor dem Schwungradgehäuse angeschraubt. Das Tellerrad 61 (Fig. 18) des Achsmittengetriebes 59 ist dabei entgegengesetzt zur Seite der Antriebsaggregatverschiebung in Richtung gegenüberliegender Seite verschoben neben der Ölwanne 60 angeordnet. Aufgrund dieser Anordnung ergibt sich der geringste Abstand Antriebsaggregat/Achsmittengetriebe. Außerdem erspart das am Antriebsaggregat 4 angeschraubte Achsmittengetriebe 59 Befestigungsböcke am Rahmen 1. Alternativ hierzu kann das Achsmittengetriebe 59 auch an den beiden Querträgern 45, 46 befestigt werden, was eine andere, je nach Antriebsaggregat günstigere Lagerung desselben ermöglicht.

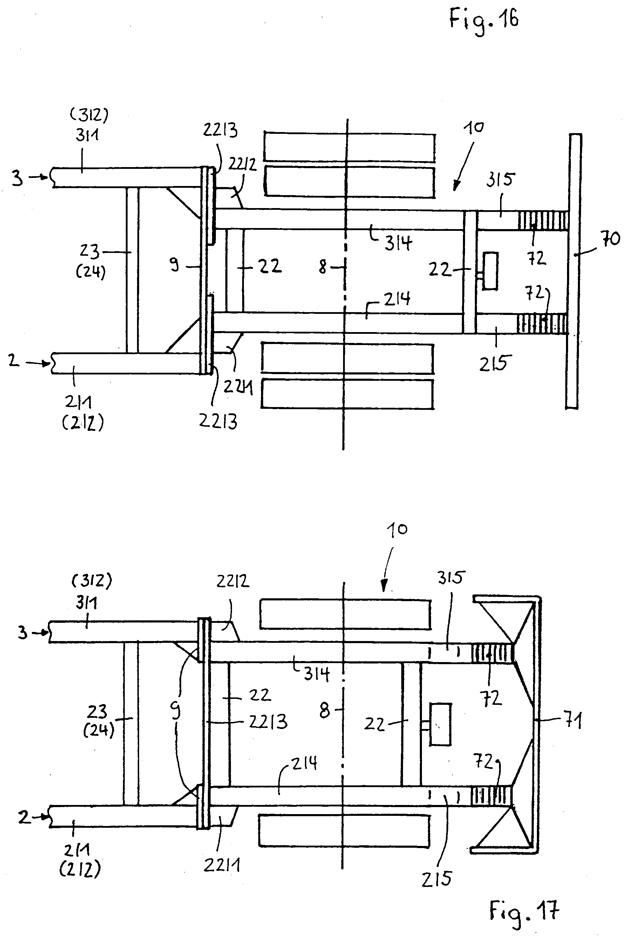

Darüberhinaus eignet sich die erfindungsgemäße Rahmenkonstruktion auch gut für ihre Weiterbildung im Hinblick auf einen sicheren hinteren Unterfahrschutz. Dies ist aus Fig. 2 und 4 in Verbindung mit Fig. 16 und 17 ersichtlich. Dabei sind die hinteren Enden der Längsträger-Abschnitte 2/1, 3/1 bzw. 2/4, 3/4 bis auf Höhe H3 der Pkw-Stoßstange 67 nach unten gezogen, durch Abkröpfen (siehe Fig. 4 und 17) oder Anschweißen (siehe Fig. 2 und 16) entsprechender Träger-Teile. Der heruntergezogene Träger-Abschnitt ist mit 2/5 bzw. 3/5 bezeichnet. Eine Rammschutzleiste 70 (siehe Fig. 4 und 16) oder eine das Heck aerodynamisch umgebende, in sich stabile Verkleidungsblende 71 (siehe Fig. 2 und 17) ist dabei über wenigstens einen in Längsrichtung nachgiebigen, in Höhe H3 der Pkw-Stoßstange 67 angeordneten Energieabsorber 72 an den hinteren Enden der heruntergezogenen Längsträger-Abschnitte 2/5, 3/5 abgestützt. Darüber hinaus kann das hintere Rahmenende ähnlich dem vorderen Rahmenende ausgestaltet, das heißt, mit einer Gabelung - wie aus Fig. 4 ersichtlich - versehen sein. Diese Gabelung besteht dann aus den heruntergezogenen Träger-Abschnitten 2/5, 3/5 und hochgezogenen Träger-Abschnitten 2/6, 3/6. Letztere sind untenseitig mindestens bis auf Höhe H2 einer Pkw-Motorhaube 26 hochgezogen und so gestaltet, daß ein Pkw bei einem Heckaufprall unter Längsverschiebung der Rammschutzleiste 70 bzw. Verkleidungsblende 71 in diese so konstruktiv vorgegebene hintere Nutzfahrzeug-Knautschzone eindringen, wobei die Aufprall-Energie durch den/die nachgiebigen Energieabsorber 72 verzehrt wird. Der/die hintere(n) Energieabsorber 72 kann/können in Verbindung mit der Rammschutzleiste 70 oder Verkleidungsblende 71 in gleicher Weise realisiert sein wie der/die frontseitig hinter dem Stoßfänger 19 gegebene(n) Energieabsorber 18.

Die oberen Träger-Abschnitte 2/6, 3/6 sind über einen Querträger 22 miteinander verbunden, der oben zur Befestigung von (in Fig. 4 gestrichelt dargestellten) Fahrzeugaufbauten, wie Pritsche, Planen- oder Kofferaufbau und dergleichen, sowie rückseitig zum Anbau von außerhalb der Knautschzone gegebenen Fahrzeugteilen wie Rückleuchten und dergleichen dient.

Die heckseitigen Längsträger-Abschnitte mit ihren Teilen 2/4, 2/5, 2/6 bzw. 3/4, 3/5, 3/6 können im Fall gemäß Fig. 4 durch ein einteiliges Blechpreßteil oder als Schweißkonstruktion aus einzeln vorgefertigten Teilen hergestellt werden. Wenn sich dagegen das Längsträger-Teil 2/2, 3/2 - wie im Fall gemäß Fig. 1 und 2 - über die Hinterachse(n) 8 hinaus nach hinten erstreckt, dann kann die endseitige Gabelung mit ihren Teilen 2/5, 2/6 bzw. 3/5, 3/6 entweder zusammen mit dem Längsträger-Teil 2/2 bzw. 3/2 als einstückiges Blechpreßteil oder durch eine Schweißkonstruktion aus vorgefertigten Einzelteilen realisiert sein.

## Patentansprüche

1. Nutzfahrzeug, insbesondere Frontlenker-Lastkraftwagen, mit einem Fahrgestell, dessen Rahmen aus zwei über Querträger verbundenen Längsträgern besteht, ein Fahrerhaus sowie ein Antriebsaggregat trägt und frontseitig einen über eine energieverzehrende Einrichtung in Höhe einer Pkw-Stoßstange angeordneten und somit in Rahmen-Längsrichtung nachgiebigen Stoßfänger aufweist, gekennzeichnet durch die Kombination folgender Merkmale,
a) der Rahmen (1) weist vordere Längsträger-Abschnitte (2/3, 3/3) auf, die gegenüber der im hinteren Fahrgestellbereich gegebenen Rahmenhöhe (H5) zumindest partiell abgesenkt und außerdem zur Bildung eines von vorn gesehen etwa V-förmigen Einbaubereiches für das Antriebsaggregat (4) in sich von der Vertikalen abweichend zumindest partiell schräg gestellt sind,
b) jeder der beiden Rahmen-Längsträger (2, 3) weist an seinem vorderen Endbereich eine Vertikalgabelung (17) auf, an deren unterem Gabel-Teil (17/1) vorne über wenigstens einen Energieabsorber (18) ein in Höhe (H3) einer Pkw-Stoßstange (67) angeordneter Stoßfänger (19) abgestützt ist, dagegen deren oberes Gabel-Teil (17/2) in einer etwas über dem Normal-Niveau einer Pkw-Motorhaube gegebenen Höhe (H2) endet und untenseitig derart gestaltet ist, daß ein frontal aufprallender Pkw unter Längsverschiebung des Stoßfängers (19) in diese im übrigen bauteil- bzw. aggregatfreie bzw. zumindest bauteil- bzw. aggregatarme und dann nur mit längsweich am Rahmen (1) befestigten Bauteilen/Aggregaten ausgestattete Nutzfahrzeug-Knautschzone eindringen kann, wobei durch den/die Energieabsorber (18) die Aufprallenergie verzehrbar ist,
c) jeder der beiden Rahmen-Längsträger (2, 3) ist etwa ab der Fahrerhaus-Rückwand (7) in ein oberes (2/1, 3/1) und ein unteres Längsträger-Teil (2/2, 3/2), die vor der Hinterachse (10) oder vor der ersten, vorderen Hinterachse (10) miteinander verbunden sind, aufgelöst.

2. Nutzfahrzeug nach Anspruch 1, dadurch gekennzeichnet, daß das abgesenkte Höhen-Niveau (H4) an den vorderen Längsträger-Abschnitten (2/3, 3/3) dem 0,6 - 0,9-fachen der Rahmen-Höhe (H5) entspricht.

3. Nutzfahrzeug nach den vorhergehenden Ansprüchen, dadurch gekennzeichnet, daß die beiden Rahmen-Längsträger (2, 3) beginnend etwa im Bereich der Fahrerhaus-Rückwand (7) und ausgehend von der im hinteren Fahrgestell-Bereich gegebenen Rahmen-Höhe (H5) schräg nach vorne auf das tiefere Höhen-Niveau (H4) herunter gezogen sind.

4. Nutzfahrzeug nach Anspruch 3, dadurch gekennzeichnet, daß das Nachunten-ziehen der Rahmen-Längsträger (2, 3) durch entsprechendes Abkröpfen derselben realisiert ist.

5. Nutzfahrzeug nach Anspruch 3, dadurch gekennzeichnet, daß das Nachunten-ziehen jedes der beiden Rahmen-Längsträger (2, 3) durch Einschweißen eines schrägen Trägerteiles zwischen höher und tiefer liegenderem Längsträger-Abschnitt realisiert ist.

6. Nutzfahrzeug nach einem der Ansprüche 1 bis 3, dadurch gekennzeichnet, daß jeder der beiden Rahmen-Längsträger (2, 3) am hinteren Ende seines vorderen Träger-Abschnittes (2/3, 3/3) eine Vertikalgabelung (12) mit oberem Gabel-Teil (12/1), an dem sich das obere Längsträger-Teil (2/1 bzw. 3/1) anschließt, und unterem Gabel-Teil (12/2), an dem sich das untere Längsträger-Teil (2/2 bzw. 3/2) anschließt, aufweist, wobei das obere Gabel-Teil (12/1) den schräg nach unten gehenden Übergangsabschnitt bildet.

7. Nutzfahrzeug nach Anspruch 6, dadurch gekennzeichnet, daß die beiden Teile (2/1, 2/2 bzw. 3/1, 3/2) jedes Rahmen-Längsträgers (2, 3) mit Abstand übereinander und in Längsrichtung im wesentlichen parallel verlaufend angeordnet sind.

8. Nutzfahrzeug nach Anspruch 6, dadurch gekennzeichnet, daß jedes der beiden Teile (2/1, 2/2 bzw. 3/1, 3/2) eines Rahmen-Längsträgers (2, 3) mit dem zugehörigem Gabel-Teil (12/1, 12/2) über Schraub- oder Nietverbindungen verbunden ist.

9. Nutzfahrzeug nach Anspruch 6, dadurch gekennzeichnet, daß jeder Rahmen-Längsträger (2, 3) einschließlich seiner beiden Teile (2/1, 2/2 bzw. 3/1, 3/2) durch ein aus mehreren vorgefertigten Einzelteilen zusammengesetzte Schweiß-Konstruktion realisiert ist.

10. Nutzfahrzeug nach einem oder mehreren der vorhergehenden Ansprüche, dadurch gekennzeichnet, daß sich beide Teile (2/1, 2/2 bzw. 3/1, 3/2) jedes Rahmen-Längsträgers (2, 3) nach hinten bis vor die (erste, vordere) Hinterachse (8) erstrecken und dort Verbindungsorgan(e) (9) aufweisen, an dem/denen das als Modul zumindest weitestgehend vormontierbare Fahrgestellheck (10) anschließbar ist, wobei der Rahmen (1) innerhalb des Fahrgestellhecks (10) nach hinten durch sich an den oberen Längsträger-Teilen (2/1, 3/1) anschließende, durch wenigstens einen Querträger (23) verbundene Längsträger-Teile (2/4, 3/4) vervollständigt ist.

11. Nutzfahrzeug nach einem oder mehreren der Ansprüche 1 bis 9, dadurch gekennzeichnet, daß das obere Teil (2/1, 3/1) jedes Rahmen-Längsträgers (2, 3) sich über die Hinterachsanordnung (10) hinaus erstreckt, während das untere Längsträger-Teil (2/2, 3/2) jeweils vor der (ersten, vorderen) Hinterachse (8) endet und dort über einen Lagerschild (11), der auch zur Anlenkung von Hinterachsaufhängungsorganen dient, mit dem oberen Längsträger-Teil (2/1, 3/1) verbunden ist.

12. Nutzfahrzeug nach einem oder mehreren der Ansprüche 1 bis 11, dadurch gekennzeichnet, daß das untere Teil (2/2, 3/2) eines der beiden Rahmen-Längsträger (2, 3) soweit nach unten verlegt ist, daß zwischen diesem und dem zugehörigen oberen Längsträger-Teil (2/1, 3/1) ein Ersatzrad (13) quer einbaubar ist.

13. Nutzfahrzeug nach einem oder mehreren der Ansprüche 1 bis 10, dadurch gekennzeichnet, daß die beiden Teile (2/1, 2/2 bzw. 3/1, 3/2) eines Rahmen-Längsträgers (2, 3) im Bereich zwischen vorderem Ende und (erster, vorderer) Hinterachse (8) auch noch durch wenigstens eine versteifende Strebe (51, 52) miteinander verbunden sind.

14. Nutzfahrzeug nach Anspruch 13, dadurch gekennzeichnet, daß die beiden Teile (2/1, 2/2 bzw. 3/1, 3/2) eines Rahmen-Längsträger (2, 3) einschließlich der Strebe(n) (51, 52) als einstückiges Blechpreßteil realisiert sind.

15. Nutzfahrzeug nach den Ansprüchen 1 und 2, dadurch gekennzeichnet, daß sich das untere Teil (2/2, 3/2) jedes Rahmen-Längsträgers (2, 3) mit ebener Oberkante auf niedrigem Höhen-Niveau (H4) in Verlängerung des vorderen Längsträger-Abschnittes (2/3, 3/3) nach hinten bis vor die (erste, vordere) Hinterachse (10) erstreckt und unmittelbar oder mit geringem Abstand darüber auf höherem Niveau (H5) das obere Teil (2/1, 3/1) des Rahmen-Längsträgers (2, 3) verläuft.

16. Nutzfahrzeug nach Anspruch 15, dadurch gekennzeichnet, daß das jeweils obere Teil (2/1, 3/1) den vorderen Träger-Abschnitt (2/3, 3/3) hinten oben überlappt und dort an letzteren angeschlossen ist, daß ferner beide Teile (2/1, 2/2 bzw. 3/1, 3/2) eines Rahmen-Längsträgers (2, 3) vor der (ersten, vorderen) Hinterachse (8) enden, und daß der Rahmen nach hinten durch sich an den oberen Längsträger-Teilen (2/1, 3/1) anschließende, durch wenigstens einen Querträger (22) verbundene Längsträger-Teile (2/4, 3/4) vervollständigt ist.

17. Nutzfahrzeug nach Anspruch 15, dadurch gekennzeichnet, daß das jeweils obere Teil (2/1, 3/1) den vorderen Träger-Abschnitt (2/3, 3/3) hinten oben überlappt, dort an letzterem angeschlossen ist und sich über die Hinterachsanordnung (8) hinaus erstreckt sowie vor der (ersten, vorderen) Hinterachse (8) über einen Lagerschild (11), der zur Anlenkung von Hinterachsaufhängungsorganen dient, mit dem unteren Längsträger-Teil (2/2, 3/2) verbunden ist.

18. Nutzfahrzeug nach Anspruch 1, dadurch gekennzeichnet, daß die beiden Teile (2/1, 2/2 bzw. 3/1, 3/2) jedes Rahmen-Längsträgers (2, 3) unterschiedliche Querschnitte aufweisen.

19. Nutzfahrzeug nach Anspruch 18, dadurch gekennzeichnet, daß das querschnittsstärkere Teil (2/1, 2/2 bzw. 3/1, 3/2) jedes Rahmen-Längsträgers (2, 3) wahlweise das untere oder obere ist.

20. Nutzfahrzeug nach Anspruch 1, dadurch gekennzeichnet, daß beide Teile (2/1, 2/2 bzw. 3/1, 3/2) eines Rahmen-Längsträgers (2, 3) den gleichen Querschnitt haben.

21. Nutzfahrzeug nach einem oder mehreren der vorhergehenden Ansprüche, dadurch gekennzeichnet, daß die jeweils oberen Teile (2/1, 3/1) und die jeweils unteren Teile (2/2, 3/2) der beiden Rahmen-Längsträger (2, 3) jeweils über wenigstens einen, vorzugsweise jedoch mehrere Querträger (23, 24) miteinander verbunden sind.

22. Nutzfahrzeug nach Anspruch 21, dadurch gekennzeichnet, daß zwei jeweils übereinander angeordnete Querträger (23, 24) direkt oder über ein Zwischenstück (25) miteinander verbunden sind.

23. Nutzfahrzeug nach Anspruch 21, dadurch gekennzeichnet, daß zwei jeweils übereinander angeordnete Querträger (23, 24) zusammen mit diese verbindenden Verstrebungen (26) durch ein Blechpreßteil realisiert sind.

24. Nutzfahrzeug nach einem oder mehreren der Ansprüche 1 bis 17, dadurch gekennzeichnet, daß an beiden Teilen (2/1, 2/2 bzw. 3/1, 3/2) eines Rahmen-Längsträgers (2, 3) außen Winkelhalter (15) mit ihren Vertikalschenkeln (15/1) angebracht, vorzugsweise angeschraubt sind, die als Träger für Fahrzeugteile (14) wie einen oder mehrere Kraftstoff- und/oder Druckluftbehälter, Batteriekästen, Staukästen und dergleichen dienen.

25. Nutzfahrzeug nach einem oder mehreren der Ansprüche 1 bis 17, dadurch gekennzeichnet, daß an beiden Teilen (2/1, 2/2 bzw. 3/1, 3/2) der Rahmen-Längsträger (2, 3) seitliche Unterfahrschutzschilde (66) tragende Halter (62, 63, 64) angebracht sind.

26. Nutzfahrzeug nach Anspruch 25, dadurch gekennzeichnet, daß die seitlichen Unterfahrschutzschilde (66) über quer nachgiebige Energieabsorber (65) an den Haltern (62, 63, 64) abgestützt sind.

27. Nutzfahrzeug nach Anspruch 26, dadurch gekennzeichnet, daß im Raum zwischen den Unterfahrschutzschilden (66) und den sie tragenden Längsträger-Teilen (2/2, 2/3 bzw. 3/2, 3/3) zu diesen hingerückt im nicht deformierbaren Bereich der Halter (62, 63, 64) Fahrzeugteile (14) wie Kraftstoff- und/oder Druckluftbehälter, Batteriekästen, Staukästen und dergleichen geschützt angeordnet sind.

28. Nutzfahrzeug nach den Ansprüchen 10, 11, 16 und 17, dadurch gekennzeichnet, daß die hinteren Enden der oberen Längsträger-Teile (2/1, 3/1) bzw. der heckseitigen Längsträger-Abschnitte (2/4, 3/4) bis auf Höhe (H3) einer Pkw-Stoßstange nach unten gezogen sind, und daß an den hinteren Enden dieser heruntergezogenen Längsträger-Abschnitte (2/5, 3/5) eine Rammschutzleiste (70) oder eine das Heck aerodynamisch umgebende Verkleidungsblende (71) über wenigstens einen in Längsrichtung nachgiebigen Energieabsorber (72) abgestützt ist, somit bei einem Aufprall eines Pkw dieser in die solchermaßen gestaltete hintere Nutzfahrzeug-Knautschzone eindringen kann und dabei durch den/die Energieabsorber (37) die Aufprall-Energie verzehrbar ist.

29. Nutzfahrzeug nach Anspruch 28, dadurch gekennzeichnet, daß die hinteren Enden der heckseitigen Längsträger-Abschnitte (2/4, 3/4) bzw. der oberen Längsträger-Teile (2/1, 3/1) mit einer Gabelung versehen sind, wobei deren untere Gabel-Teile durch die heruntergezogenen Träger-Abschnitte (2/5, 3/5), die oberen Gabel-Teile dagegen durch hochgezogene Träger-Abschnitte (2/6, 3/6) gebildet sind, deren Unterseite mindestens in Höhe (H3) einer Pkw-Stoßstange (22) endet und so gestaltet ist, daß ein Pkw bei einem Heckaufprall unter Längsverschiebung der Rammschuztleiste (70) bzw. der Verkleidungsblende (71) bis zur Enddeformation des/der Energieabsorber(s) (72) in diese so gestaltete heckseitige Nutzfahrzeug-Knautschzone eintauchen kann.

30. Nutzfahrzeug nach Anspruch 28, dadurch gekennzeichnet, daß das Nachunten-ziehen der hinteren Längsträger-Enden (2/5, 3/5) durch Abkröpfen derselben oder Einschweißen eines entsprechenden Träger-Teiles realisiert ist.

31. Nutzfahrzeug nach Anspruch 29, dadurch gekennzeichnet, daß die heckseitige Gabelung mit ihren Teilen (2/5, 2/6 bzw. 3/5, 3/6) zusammen mit dem davor gegebenen Längsträger-Teil (2/4, 3/4 bzw. 2/1, 3/1) als Blechpreßteil oder als Schweißkonstruktion realisiert ist.

32. Nutzfahrzeug nach Anspruch 1, dadurch gekennzeichnet, daß an jedem unteren Gabel-Teil (17/1) der frontseitigen Vertikalgabelung (17) jedes Rahmen-Längsträgers (2, 3) ein eigener Energieabsorber (18) angeordnet ist.

33. Nutzfahrzeug nach Anspruch 1, dadurch gekennzeichnet, daß die unteren Gabel-Teile (17/1) jeder frontseitigen Vertikalgabelung (17) an beiden Rahmen-Längsträgern (2, 3) einen sich zumindest annähernd über die gesamte Länge/Fahrzeugbreite des Stoßfängers (19) hinter diesem erstreckenden Energieabsorber (18) tragen.

34. Nutzfahrzeug nach einem der Ansprüche 32 und 33, dadurch gekennzeichnet, daß der/die Energieabsorber (18) an einer Quertraverse abgestützt und angeschlossen sind, die die vorderen Enden der unteren Gabel-Teile (17/1) der Vertikal-Gabelungen (17) beider Längsträger (2, 3) miteinander verbindet.

35. Nutzfahrzeug nach einem der Ansprüche 32 bis 34, dadurch gekennzeichnet, daß der Stoßfänger (19) innen eine Querverstrebung aufweist, an der der/die Energieabsorber (18) angeschlossen sind.

36. Nutzfahrzeug nach Anspruch 1, dadurch gekennzeichnet, daß die vorderen Längsträger-Abschnitte (2/3, 3/3) auch für einen direkten Anschluß von Einzelradaufhängungsorganen mit entsprechenden Aus- und Einbuchtungen (44; 44/1, 44/2; 44/3, 44/4; 47, 48; 49, 50; 57, 58) versehen sind, daß ferner für die Einzelaufhängung je Vorderrad (27, 28) zwei, beabstandet in etwa parallelen Querebenen wirkende Dreiecksquerlenker (29, 30; 31, 32) vorgesehen sind, die jeweils innenendes am Rahmen (1), außenendes oben bzw. unten am Achsschenkel (33, 34) des zugehörigen Vorderrades (27 bzw. 28), dort über ein Anschlußorgan (35, 36, 37, 38) angelenkt sind, wobei jeder obere Dreiecksquerlenker (29, 31) mit seinen innenendes gegebenen Lageraugen (29/3, 29/4; 31/3, 31/4) in außen am vorderen Längsträger-Abschnitt (2/3, 3/3) gegebene Vertiefungen (44) hineinragt und direkt außen an letzterem über Pratzengelenke (43) befestigt ist, wobei ferner jeder untere Dreiecksquerlenker (30, 32) längere Schenkel (30/1, 30/2; 32/1, 32/2) mit weiter voneinander beabstandeten Lageraugen (30/3, 30/4; 32/3, 32/4) als der zugehörige obere Dreiecksquerlenker (29, 31) hat und außerdem mit seinen innenendes gegebenen Lageraugen (30/3, 30/4; 32/3, 32/4) am unteren Bereich zweier die beiden vorderen Längsträger-Abschnitte (2/3, 3/3) verbindender, von vorne gesehen etwa V-förmig nach unten gezogener Querträger (45, 46), in deren offene Profilräume (45/1, 45/2, 45/3, 46/1, 46/2, 46/3) hineinragt sowie außen an anderen Profilabschnitten (45/4, 45/5; 46/4, 46/5) der Querträger (45, 46) ebenfalls über Pratzengelenke (43) befestigt ist.

37. Nutzfahrzeug nach Anspruch 36, dadurch gekennzeichnet, daß die Schenkel (30/1, 30/2; 32/1, 32/2) der unteren Dreiecksquerlenker (30, 32) länger als die Schenkel (29/1, 29/2; 31/1, 31/2) der obere Dreieckslenker (29, 31) sind, und daß der Abstand der Lageraugen (30/3, 30/4; 32/3, 32/4) der unteren Dreiecksquerlenker (30, 32) größer als jener der Lageraugen (29/3, 29/4; 31/3, 31/4) der oberen Dreiecksquerlenker (29, 31) ist.

38. Nutzfahrzeug nach Anspruch 36, dadurch gekennzeichnet, daß die Lageraugen der Dreiecksquerlenker (29, 30, 31, 32) sich quer zur Fahrzeug-Längsachse erstreckende parallele Seitenflächen aufweisen und die Längsachsen der die Lageraugen durchdringenden Pratzengelenke (43) parallel zur Fahrzeug-Längsachse verlaufen.

39. Nutzfahrzeug nach Anspruch 36, dadurch gekennzeichnet, daß jeder der beiden V-förmig heruntergezogenen Querträger (45, 46) einen offenen U-T-Querschnitt hat, wobei die Basis durch ein nach außen offenes U-Profil gebildet ist, an dessen beiden Seitenschenkeln (45/1, 45/2; 46/1, 46/2) sich außen abragende, zum U-Profil-Boden (45/3, 46/3) parallele, für Anlage und Anschluß der die unteren Dreiecksquerlenker (30, 32) fixierenden Pratzengelenke (43) dienende T-Stege (45/4, 45/5; 46/4, 46/5) anschließen, wobei diese Querträger (45, 46) mit ihrem U-Profil-Boden am mit entsprechend schrägen, gegebenenfalls an Ein- oder Ausbuchtungen (49, 50) gegebenen Anlageflächen (47, 48) versehenen Steg der vorderen Längsträger-Abschnitte (2/3, 3/3) außen anliegend befestigt - angeschraubt, angenietet oder angeschweißt-sind.

40. Nutzfahrzeug nach Anspruch 39, dadurch gekennzeichnet, daß jeder der beiden Querträger (45, 46) - von vorne gesehen - einen an tiefster Stelle gegebenen, gegenüber der Breite des Antriebsaggregates (4) größeren Horizontalabschnitt (45/6, 46/6) aufweist, an dessen beiden Enden schräg nach oben außen gerichtete Schenkel (45/7, 45/8; 46/7, 46/8) abgehen, deren obere Endbereiche gegenüber den unteren etwas steiler gestellt sind und jene Abschnitte bilden, mit denen die Querträger (45, 46) außen an den Stegen der vorderen Längsträger-Abschnitte (2/3, 3/3) befestigt sind, dagegen die Anschlußstellen für die zur Fixierung der unteren Dreiecksquerlenker (30, 32) dienenden Pratzengelenke (43) am unteren Ende der schrägen Schenkel (45/7, 45/8; 46/7, 46/8) durch schräge T-Steg-Abschnitte gegeben sind.

41. Nutzfahrzeug nach einem der Ansprüche 37 bis 40, dadurch gekennzeichnet, daß die Vertiefungen (44) für die Aufnahme der Lageraugen (29/3, 29/4; 31/3, 31/4) der oberen Dreiecksquerlenker (29, 31) durch außenmittig von außen her in die Stege der vorderen Längsträger-Abschnitte (2/3, 3/3), nach unten nahe zum steifen Eckbereich mit dem Untergurt hingerückt eingepreßte Taschen gebildet sind, und daß die beiderseits jeder Tasche am Steg gegebenen Auflagen (44/3, 44/4) für das jeweilige Pratzengelenk (43) an im Steg nach außen gepreßten Vorsprüngen entsprechend kalibriert sind.

42. Nutzfahrzeug nach einem der Ansprüche 37 bis 40, dadurch gekennzeichnet, daß die Vertiefungen (44) für die Aufnahme der Lageraugen (29/3, 29/4; 31/3, 31/4) der oberen Dreiecksquerlenker (29, 31) jeweils durch den Freiraum zwischen zwei am Steg jedes vorderen Längsträger-Abschnittes (2/3, 3/3) entsprechend weit von innen nach außen herausgepreßten Vorsprüngen gegeben sind, an denen außen die Auflageflächen (44/3, 44/4) für das jeweils zugehörige Pratzengelenk (43) entsprechend kalibriert sind.

43. Nutzfahrzeug nach einem der Ansprüche 37 bis 40, dadurch gekennzeichnet, daß jeder der beiden V-förmigen Querträger (45, 46) durch ein Blechpreßteil realisiert ist.

44. Nutzfahrzeug nach einem der Ansprüche 37 bis 40, dadurch gekennzeichnet, daß jeder der beiden V-förmigen Querträger (45, 46) durch zwei zur Fahrzeuglängsachse spiegelsymmetrische und längs der Symmetrielinie zusammengeschweißte Blechpreßteile realisiert ist.

45. Nutzfahrzeug nach Anspruch 36, dadurch gekennzeichnet, daß bei Vorsehen einer Luftfederung zur Anbindung eines die Luftfeder (54) je Vorderrad (27, 28) oben abstützenden Federbockes (56) jeder vordere Längsträger-Abschnitt (2/3, 3/3) örtlich nach oben und außen gezogen (57) und mit einer Einbuchtung (58) versehen ist, an welcher Profilierung (57, 58) der Federbock (56) mit seinem Anschlußbereich (56/1) formmäßig entsprechend angepaßt und befestigt ist, und daß jede Luftfeder (54) oben mit einem Stoßdämpfer (53) vereinigt ist, der unten an einem der zugehörigen Dreiecksquerlenker (29, 30 bzw. 31, 32) am Übergangsbereich von dessen beiden Schenkeln abgestützt angelenkt ist.

## Claims

1. A commercial vehicle, more particularly a front control lorry, comprising a chassis, whose frame is formed by two longitudinal supports connected by transverse supports, supports a driver's cab and a drive unit and at its front end comprises a bumper, which is arranged via an energy-dissipating device at the height of a car bumper and therefore yields in the longitudinal direction of the frame, characterised by the combination of the following features,
a) the frame (1) comprises front longitudinal support sections (2/3, 3/3), which are at least partially lowered relative to the frame height (H5) in the rear chassis region and are also at least partially inclined at an angle deviating from the vertical to form an installation area, which is V-shaped from the front, for the drive unit (4),
b) each of the two longitudinal frame supports (2, 3) comprises in its front end region a vertical fork (17), on the front of whose lower fork section (17/1) a bumper (19) is supported, which is arranged at the height (H3) of a car bumper (67) and is supported via at least one energy absorber (18), whilst the upper fork section (17/2) ends at a height (H2) somewhat above the normal level of a car bonnet and is constructed on its underside in such a manner that, with a longitudinal displacement of the bumper (19), a frontally impacting car can penetrate this commercial vehicle crumple zone, which is free of components or assemblies or has few components or assemblies which are then only secured along the length of the frame (1), the impacting energy being dissipated by the energy absorber(s)(18),
c) each of the two longitudinal frame supports (2, 3) divides approximately from the driver's cab rear wall (7) into an upper (2/1, 3/1) and a lower longitudinal support section (2/2, 3/2), which are joined together in front of the rear axle (10) or in front of the first, front rear axle (10).

2. A commercial vehicle according to claim 1, characterised in that the lower level (H4) of the front longitudinal support sections (2/3, 3/3) corresponds to 0.6 - 0.9 times the frame height (H5).

3. A commercial vehicle according to one of the preceding claims, characterised in that the two longitudinal frame supports (2, 3) are downwardly and forwardly bent at an angle, beginning approximately in the region of the driver's cab rear wall (7) and extending from the frame height (H5) in the rear chassis region, to extend at the lower height (H4).

4. A commercial vehicle according to claim 3, characterised in that the downward angling of the longitudinal frame supports (2, 3) is realised by a corresponding cranking of said supports.

5. A commercial vehicle according to claim 3, characterised in that the downward angling of the longitudinal frame supports (2, 3) is realised by welding an inclined support element between higher and lower-lying longitudinal support sections.

6. A commercial vehicle according to one of claims 1 to 3, characterised in that, at the rear end of its front support section (2/3, 3/3), each of the two longitudinal frame supports (2, 3) comprises a vertical fork (12) with an upper fork section (12/1), adjoining which is the upper longitudinal support section (2/1 or 3/1), and a lower fork section (12/2), adjoining which is the lower longitudinal support section (2/2 or 3/2), the lower fork section (12/1) forming the downwardly inclined transition section.

7. A commercial vehicle according to claim 6, characterised in that the two sections (2/1, 2/2 or 3/1, 3/2) of each longitudinal frame support (2, 3) are arranged spaced apart and extend substantially parallel in the longitudinal direction.

8. A commercial vehicle according to claim 6, characterised in that each of the two sections (2/1, 2/2 or 3/1, 3/2) of a longitudinal frame support (2, 3) is connected to the associated fork section (12/1, 12/2) via screw or rivet connections.

9. A commercial vehicle according to claim 6, characterised in that each longitudinal frame support (2, 3) including its two sections (2/1, 2/2 or 3/1, 3/2) is realized by a welded structure assembled from a plurality of prefabricated individual parts.

10. A commercial vehicle according to one or more of the preceding claims, characterised in that both sections (2/1, 2/2 or 3/1, 3/2) of each longitudinal frame support (2, 3) extend backwards to a location in front of the (first, front) rear axle (8), where they comprise one or more connecting members (9), to which the chassis tail (10) can be connected, which can be at least largely preassembled as a module, the frame (1) being completed at the rear within the chassis tail (10) by longitudinal support sections (2/4, 3/4), which adjoin the upper longitudinal support sections (2/1, 3/1) and are connected by at least one transverse support (23).

11. A commercial vehicle according to one or more of claims 1 to 9, characterised in that the upper section (2/1, 3/1) of each longitudinal frame support (2, 3) extends beyond the rear axle arrangement (10), whilst the lower longitudinal support section (2/2, 3/2) ends in each case in front of the (first, front) rear axle (8), where it is connected to the upper longitudinal support section (2/1, 3/1) via a bearing plate (11), which is also used for the articulated connection of the rear axle suspension members.

12. A commercial vehicle according to one or more of claims 1 to 11, characterised in that the lower section (2/2, 3/2) of one of the two longitudinal frame supports (2, 3) is angled downwards to such a degree that a spare wheel (13) can be fitted transversely between the said lower section (2/2, 3/2) and the associated upper longitudinal support section (2/1, 3/1).

13. A commercial vehicle according to one or more of claims 1 to 10, characterised in that the two sections (2/1, 2/2 or 3/1, 3/2) of a longitudinal frame support (2, 3) are also connected to one another in the region between the front end and the (first, front) rear axle (8) by means of at least one reinforcing strut (51, 52).

14. A commercial vehicle according to claim 13, characterised in that the two sections (2/1, 2/2 or 3/1, 3/2) of a longitudinal frame support (2, 3) including the strut(s) (51, 52) are constructed as an integrally stamped sheet metal part.

15. A commercial vehicle according to claims 1 and 2, characterised in that the lower section (2/2, 3/2) of each longitudinal frame support (2, 3) extends backwards with a flat upper edge at the low level (H4) as the extension of the front longitudinal support section (2/3, 3/3) to a location in front of the (first, front) rear axle (10), and the upper section (2/1, 3/1) of the longitudinal frame support (2, 3) extends at a short distance above the lower section at a higher level (H5).

16. A commercial vehicle according to claim 15, characterised in that the respective upper section (2/1, 3/1) overlaps the front support section (2/3, 3/3) at the rear where it is connected to the latter, furthermore both sections (2/1, 2/2 or 3/1, 3/2) of a longitudinal frame support (2, 3) end in front of the (first, front) rear axle (8), and the frame is completed at the rear by longitudinal support sections (2/4, 3/4), which adjoin the upper longitudinal support sections (2/1, 3/1) and are connected by at least one transverse support (22).

17. A commercial vehicle according to claim 15, characterised in that the respective upper section (2/1, 3/1) overlaps the front support section (2/3, 3/3) at the rear, where it is connected to the latter, extends beyond the rear axle arrangement (8) and is connected in front of the (first, front) rear axle (8) to the lower longitudinal support section (2/2, 3/2) via a bearing plate (11), which is used for the articulated connection of rear axle suspension members.

18. A commercial vehicle according to claim 1, characterised in that the two sections (2/1, 2/2 or 3/1, 3/2) of each longitudinal frame support (2, 3) have different cross sections.

19. A commercial vehicle according to claim 18, characterised in that the section (2/1, 2/2 or 3/1, 3/2) of each longitudinal frame support (2, 3) having the larger cross section can be either the lower or upper section.

20. A commercial vehicle according to claim 1, characterised in that both sections (2/1, 2/2 or 3/1, 3/2) of a longitudinal frame support (2, 3) have the same cross section.

21. A commercial vehicle according to one or more of the preceding claims, characterised in that the respective upper sections (2/1, 3/1) and the respective lower sections (2/2, 3/2) of the two longitudinal frame supports (2, 2) are connected with each other via at least one but preferably a plurality of transverse supports (23, 24).

22. A commercial vehicle according to claim 21, characterised in that two superimposed transverse supports (23, 24) are connected with one another directly or via an intermediate element (25).

23. A commercial vehicle according to claim 21, characterised in that two superimposed transverse supports (23, 24) are integrally formed with the said strutting (26) by a stamped sheet metal part.

24. A commercial vehicle according to one or more of claims 1 to 17, characterised in that angle supports (15) are fitted with their vertical limbs to the outside of both sections (2/1, 2/2 or 3/1, 3/2) of a longitudinal frame support (2, 3), preferably by screwing, and act as supports for vehicle components (14), such as one or more fuel and/or compressed air reservoirs, battery boxes, weir boxes and the like.

25. A commercial vehicle according to one or more of claims 1 to 17, characterised in that supports (62, 63, 64) supporting lateral underrun protection plates (66) are fitted to both sections (2/1, 2/2 or 3/1, 3/2) of the longitudinal frame support (2, 3).

26. A commercial vehicle according to claim 25, characterised in that the lateral underrun protection plates (66) are supported on the supports (62, 63, 64) via transversally yielding energy absorbers (65).

27. A commercial vehicle according to claim 26, characterised in that vehicle components (14) such as fuel and/or compressed air reservoirs, battery boxes, weir boxes and the like are arranged in a protected manner in the space between the underrun protection plates (66) and the longitudinal support sections (2/2, 2/3 or 3/2, 3/3) supporting said plates, displaced towards the longitudinal support sections in the non-deformable region of the supports (62, 63, 64).

28. A commercial vehicle according to claims 10, 11, 16 and 17, characterised in that the rear ends of the upper longitudinal support sections (2/1, 3/1) or the tail longitudinal support sections (2/4, 3/4) are bent downwards to the height (H3) of a car bumper, and at the rear ends of these downwardly bent longitudinal support sections (2/5, 3/5) a collision strip (70) or a cover shield (71) is supported via at least one energy absorber (72), which yields in the longitudinal direction, so that in the event of a car crashing into the rear of the commercial vehicle, the car can penetrate the rear commercial vehicle crumple zone constructed in this manner, the impacting energy being dissipated by the energy absorber(s) (37).

29. A commercial vehicle according to claim 28, characterised in that the rear ends of the tail longitudinal support sections (2/4 3/4) or of the upper longitudinal support sections (2/1, 3/1) are provided with a fork, the lower fork sections being formed by the downwardly bent support sections (2/5, 3/5), whilst the upper fork sections are formed by the upwardly bent support sections (2/6, 3/6), whose underside ends at least at the height (H3) of a car bumper and is constructed in such a manner that, in the event of a car crashing into the rear of the commercial vehicle, the car can penetrate the rear commercial vehicle crumple zone constructed in this manner with a longitudinal displacement of the collision strip (70) or the cover shield (71) until the full deformation of the energy absorber(s) (72) is reached.

30. A commercial vehicle according to claim 28, characterised in that the downward angling of the rear longitudinal support ends (2/5, 3/5) is realized by a cranking of said ends or by welding a corresponding support section in place.

31. A commercial vehicle according to claim 29, characterised in that the rear fork with its sections (2/5, 2/6 or 3/5, 3/6) is realized together with the preceding longitudinal support section (2/4, 3/4 or 2/1, 3/1) as a stamped sheet metal part or welded structure.

32. A commercial vehicle according to claim 1, characterised in that a separate energy absorber (18) is arranged on each lower fork section (17/1) of the front vertical fork (17) of each longitudinal frame support (2, 3).

33. A commercial vehicle according to claim 1, characterised in that the lower fork sections (17/1) of each front fork (17) of both longitudinal frame supports (2, 3) support an energy absorber (18), which extends at least approximately over the entire length/vehicle width of the bumper (19) behind said bumper.

34. A commercial vehicle according to one of claims 32 and 33, characterised in that the energy absorber(s) (18) is/are supported on and connected to a traverse, which connects the front ends of the lower fork sections (17/1) of the vertical fork (17) of both longitudinal supports (2, 3) to one another.

35. A commercial vehicle according to one of claims 32 to 34, characterised in that the bumper (19) comprises a cross strut on the inside, to which the energy absorber(s) (18) is/are connected.

36. A commercial vehicle according to claim 1, characterised in that the front longitudinal support sections (2/3, 3/3) are also provided for the direct connection of independent wheel suspension members with corresponding recesses and protuberances (44; 44/1, 44/2, 44/3, 44/4; 47, 48; 49, 50; 57, 58), furthermore for the independent suspension each front wheel (27, 28) is provided with two spaced-apart triangular transversal pivotal arms (29, 30; 31, 32), which act in approximately parallel transverse planes and are articulatedly connected at their inner ends to the frame (1) and at their outer ends to the top or bottom of the axle journal (33, 34) of the associated front wheel (27, 28) via a connecting member (35, 36, 37, 38), each upper triangular transversal pivotal arm (29, 31) projecting with its inner-end bearing eyelets (29/3, 29/4; 31/3, 31/4) into recesses (44) provided on the outside of the front longitudinal support section (2/3, 3/3) and being secured directly to the outside of the latter via claw joints (43), furthermore each lower triangular transversal pivotal arm (30, 32) having longer limbs (30/1, 30/2; 32/1, 32/2) with bearing eyelets (30/3, 30/4; 32/3, 32/4) spaced further apart than the associated upper triangular transversal pivotal arm (29, 31) and in addition projecting with its two inner-end bearing eyelets (30/3, 30/4; 32/3, 32/4) in the lower region of the two transverse supports (45, 46), which are bent downwards in an approximate V-shape viewed from the front and connect the two front longitudinal support sections (2/3, 3/3), into the outwardly open profile chambers (45/1, 45/2, 45/3, 46/1, 46/2, 46/3) thereof, and also being secured on the outside to the other profile sections (45/4, 45/5; 46/4, 46/5) of the transverse supports (45, 46) via claw joints (43).

37. A commercial vehicle according to claim 36, characterised in that the limbs (30/1, 30/2; 32/1, 32/3) of the lower triangular transversal pivotal arms (30, 32) are longer than the limbs (29/1, 29/2; 31/1, 31/2) of the upper triangular pivotal arm (29, 31), and the distance between the bearing eyelets (30/3, 30/4; 32/3, 32/4) of the lower triangular transversal pivotal arms (30, 32) is greater than that between the bearing eyelets (29/3, 29/4; 31/3, 31/4) of the upper triangular transversal pivotal arms (29, 31).

38. A commercial vehicle according to claim 36, characterised in that the bearing eyelets of the triangular transversal pivotal arms (29, 30, 31, 32) comprise parallel lateral surfaces extending transversely to the longitudinal axis of the vehicle, and the longitudinal axes of the claw joints (43) penetrating the bearing eyelets extend parallel to the longitudinal axis of the vehicle.

39. A commercial vehicle according to claim 36, characterised in that each of the two transverse supports (45, 46) bent downwards in a V-shape has an open U-T cross section, the base being formed by an outwardly open U-profile, adjoining whose two lateral limbs (45/1, 45/2; 46/1, 46/2) are outwardly projecting T-webs (45/4, 45/5; 46/4, 46/5), which are parallel to the U-profile base (45/3, 46/3) and are used for bearing and connecting the claw joints (43) securing the lower triangular transversal pivotal arms (30, 32), the transverse supports (45, 46) being secured with their U-profile base, by screwing, riveting or welding, to the outside of the web of the front longitudinal support sections (2/3, 3/3), which web is provided with correspondingly inclined bearing surfaces (47, 48) optionally provided in recesses or on protuberances (49, 50).

40. A commercial vehicle according to claim 39, characterised in that each of the two transverse supports (45, 46) - viewed from the front - comprises at its lowermost point a horizontal section (45/6, 46/6) which is larger than the width of the drive unit (4), upwardly inclined and outwardly pointing limbs (45/7, 45/8; 46/7, 46/8) extending from both ends of said horizontal section, the upper end regions of the limbs (45/7, 45/8; 46/7, 46/8) extending at a steeper angle than the lower end regions and forming the sections by means of which the transverse supports (45, 46) are secured to the outside of the webs of the front longitudinal support sections (2/3, 3/3), whilst the connection sites for the claw joints (43) used for securing the lower triangular transversal pivotal arms (30, 32) are provided at the lower end of the inclined limbs (45/7, 45/8; 46/7, 46/8) by inclined T-web sections.

41. A commercial vehicle according to one of claims 37 to 40, characterised in that the recesses (44) for receiving the bearing eyelets (29/3, 29/4; 31/3, 31/4) of the upper triangular transversal pivotal arms (29, 31) are formed by pockets, which are pressed off-centre from the outside into the webs of the front longitudinal support sections (2/3, 3/3), displaced downwards into the vicinity of the rigid corner regions with the lower belt, and the bearing surfaces (44/3, 44/4) provided either side of each pocket on the web for the respective claw joint (43) are correspondingly calibrated on projections pressed outwards into the web.

42. A commercial vehicle according to one of claims 37 to 40, characterised in that the recesses (44) for receiving the bearing eyelets (29/3, 29/4; 31/3, 31/4) of the upper triangular transversal pivotal arms (29, 31) are formed in each case by the space between two projections which are pressed a corresponding distance from the inside outwards into the web of each front longitudinal support section (2/3, 3/3), the bearing surfaces (44/3, 44/4) on the outside of the projections for the respective claw joint (43) being correspondingly calibrated.

43. A commercial vehicle according to one of claims 37 to 40, characterised in that each of the two V-shaped transverse supports (45, 46) is realized by a stamped sheet metal part.

44. A commercial vehicle according to one of claims 37 to 40, characterised in that each of the two V-shaped transverse supports (45, 46) is realized by two stamped sheet metal parts which are mirror-symmetrical to the longitudinal axis of the vehicle and are welded together along the line of symmetry.

45. A commercial vehicle according to claim 36, characterised in that, in cases where pneumatic suspension is provided, for connecting a spring block (56) which supports the air spring (54) of each front wheel (27, 28) from above, each front longitudinal support section (2/3, 3/3) is bent (57) upwards and outwards locally and is provided with a cavity (58), to which profiling (57, 58) of the spring block (56) is correspondingly matched in shape and secured with its connection region (56/1), and each air spring (54) is connected to the top of a shock absorber (53), which is articulatedly connected at the bottom to one of the associated triangular transversal pivotal arms (29, 30 or 31, 32), supported in the transition region by the two limbs thereof.

## Revendications

1. Véhicule utilitaire notamment camion à cabine avancée, comportant un châssis dont le cadre se compose de deux longerons reliés par des traverses, une cabine ainsi qu'un groupe-moteur, et à l'avant un pare-chocs monté à la hauteur d'un pare-chocs de véhicule de tourisme par l'intermédiaire d'une installation dissipant de l'énergie, le pare-chocs cédant dans la direction longitudinale du cadre, caractérisé par la combinaison des caractéristiques suivantes :
a) le cadre (1) comporte des segments avant de longeron (2/3, 3/3) qui sont au moins partiellement abaissés par rapport à la hauteur de cadre (H5) de la zone arrière du châssis et en outre, ont en vue de face sensiblement une forme de (V), en étant disposés au moins partiellement en biais par rapport à la direction verticale, pour former une zone de réception pour le groupe-moteur (4),
b) au niveau de sa zone d'extrémité avant, chacun des deux longerons (2, 3) comporte une fourche verticale (17) dont la partie inférieure (17/1) de la fourche porte à l'avant, par l'intermédiaire d'au moins un dispositif absorbant l'énergie (18), un pare-chocs (19) placé à la hauteur (H3) d'un pare-chocs (67) de véhicule de tourisme alors que sa partie supérieure (17/2) de fourche se termine à une hauteur (H2), donnée, sensiblement supérieure à la hauteur normale d'un capot de véhicule de tourisme, et la face inférieure de cette partie est conçue pour qu'un véhicule de tourisme arrivant frontalement puisse pénétrer dans cette zone d'écrasement du véhicule utilitaire, avec déplacement longitudinal du pare-chocs (19) dans cette zone qui du reste ne comporte ni équipements, ni accessoires ou du moins peu d'équipements et d'accessoires, et alors seulement fixés au cadre (1) de manière souple longitudinalement, l'énergie du choc étant dissipée par le ou les dispositifs absorbant l'énergie (18),
c) chacun des deux longerons (2, 3) est divisé sensiblement à partir de la cloison arrière (7) de la cabine en une partie supérieure (2/1, 3/1) et une partie inférieure (2/2, 3/2), ces parties étant reliées l'une à l'autre devant l'essieu arrière (10) ou le premier essieu arrière (10).

2. Véhicule utilitaire selon la revendication 1, caractérisé en ce que le niveau de hauteur (H4), abaissé des segments avant (2/3, 3/3) des longerons correspond à 0,6-0,9 fois la hauteur (H5) du cadre.

3. Véhicule utilitaire selon l'une des revendications précédentes, caractérisé en ce que les deux longerons (2, 3) sont abaissés en biais vers l'avant jusqu'au niveau (H4) de hauteur plus faible, en commençant sensiblement au niveau de la paroi arrière (7) de la cabine et en partant de la hauteur (H5) du cadre correspondant à la zone arrière du châssis.

4. Véhicule utilitaire selon la revendication 3, caractérisé en ce que l'abaissement des longerons (2, 3) du cadre se fait par un cintrage approprié de ces longerons.

5. Véhicule utilitaire selon la revendication 3, caractérisé en ce que l'abaissement de chacun des deux longerons (2, 3) du cadre se fait en soudant une partie inclinée de longeron entre le segment de longeron haut et le segment de longeron bas.

6. Véhicule utilitaire selon l'une des revendications 1 à 3, caractérisé en ce qu'à l'extrémité arrière de son segment avant (2/3, 3/3), chacun des deux longerons (2, 3) du cadre comporte une fourche verticale (12) avec une partie supérieure (12/1) de fourche à laquelle se joint la partie supérieure (2/1 ou 3/1) du longeron et en ce qu'à la partie inférieure (12/2) de la fourche se joint la partie inférieure (2/2 ou 3/2) du longeron, la partie supérieure (12/1) de la fourche formant le segment de transition descendant en biais.

7. Véhicule utilitaire selon la revendication 6, caractérisé en ce que les deux parties (2/1, 2/2 ou 3/1, 3/2) de chaque longeron (2, 3) du cadre sont disposées essentiellement parallèlement à la direction longitudinale, et de façon superposée en laissant un intervalle.

8. Véhicule utilitaire selon la revendication 6, caractérisé en ce que chacune des deux parties (2/1, 2/2 ou 3/1, 3/2) d'un longeron (2, 3) du cadre est reliée à la partie correspondante (12/1, 12/2) de la fourche par des liaison à vis ou à rivets.

9. Véhicule utilitaire selon la revendication 6, caractérisé en ce que chaque longeron (2, 3) du châssis y compris ses deux parties (2/1, 2/2 ou 3/1, 3/2) est réalisé par une construction mécano soudée de plusieurs pièces séparées, préfabriquées.

10. Véhicule utilitaire selon une ou plusieurs des revendications précédentes, caractérisé en ce que les deux parties (2/1, 2/2 ou 3/1, 3/2) de chaque longeron (2,3) du cadre s'étendent vers l'arrière juste devant l'essieu arrière ou juste devant le premier essieu arrière (8) et y comporte un ou des organes de liaison (9) auxquels on relie l'arrière (10) du véhicule, dans une large mesure pré-assemblé, au moins comme module, le cadre (1) se complétant à l'arrière (10) du véhicule, vers l'arrière par des parties de longeron (2/4, 3/4), adjacentes aux parties supérieures de longeron (2/1, 3/1) et qui sont reliées par au moins une traverse (23).

11. Véhicule utilitaire selon une ou plusieurs des revendications 1 à 9, caractérisé en ce que la partie supérieure (2/1, 3/1) de chaque longeron (2, 3) du cadre s'étend au-delà de l'essieu arrière (10) alors que la partie inférieure de longeron (2/2, 3/2) se termine chaque fois devant l'essieu arrière (8) ou le premier essieu arrière en y étant relié à la partie supérieure de longeron (2/1, 3/1) par un flasque (11) servant également à l'articulation des organes de suspension de l'essieu arrière.

12. Véhicule utilitaire selon une ou plusieurs des revendications 1 à 11, caractérisé en ce que la partie inférieure (2/2, 3/2) de l'un des deux longerons (2, 3) est déplacée vers le bas suffisamment pour qu'entre celui-ci et la partie supérieure correspondante (2/1, 3/1) du longeron on puisse placer une roue de secours (13).

13. Véhicule utilitaire selon une ou plusieurs des revendications 1 à 10, caractérisé en ce que les deux parties (2/1, 2/2) ou (3/1, 3/2) d'un longeron (2, 3) du cadre sont reliées dans la zone comprise entre l'extrémité avant et l'essieu arrière (8) ou le premier essieu arrière (8), également par au moins une entretoise de rigidification (51, 52).

14. Véhicule utilitaire selon la revendication 13, caractérisé en ce que les deux parties (2/1, 2/2 ou 3/1, 3/2) d'un longeron (2,3) du cadre y compris là où les entretoise (51, 52) sont réalisées en une seule pièce comme pièce en tôle pressée.

15. Véhicule utilitaire selon une ou plusieurs des revendications 1 et 2, caractérisé en ce que la partie inférieure (2/2, 3/3) de chaque longeron (2,3) du cadre s'étend par son arête supérieure à un niveau de hauteur (H4) plus faible dans le prolongement du segment avant (2/3, 3/3) du longeron, vers l'arrière jusque devant l'essieu arrière (10) ou le premier essieu arrière et directement ou à une faible distance au-dessus, à un niveau supérieur (H5) se trouve la partie supérieure (2/1, 3/1) du longeron (2, 3) du cadre.

16. Véhicule utilitaire selon la revendication 15, caractérisé en ce que chaque fois la partie supérieure (2/1, 3/1) chevauche vers l'arrière, le segment de longeron avant (2/3, 3/3) et est reliée à celui-ci et en ce qu'en outre les deux parties (2/1, 2/2 ou 3/1, 3/2) d'un longeron de cadre (2, 3) se terminent devant l'essieu arrière (8) ou le premier essieu arrière et en ce que le cadre est complété à l'arrière par des parties de longeron (2/4, 3/4) reliées par au moins une traverse (22) et qui font suite aux parties supérieures de longeron (2/1, 3/1).

17. Véhicule utilitaire selon la revendication 15, caractérisé en ce que chaque fois la partie supérieure (2/1, 3/1) chevauche à l'arrière le segment avant (2/3, 3/3) du longeron en étant reliée à celui-ci et s'étend au-delà de l'essieu arrière (8) et avant l'essieu arrière (8) ou le premier essieu arrière il est relié à la partie inférieure (2/2, 3/2) du longeron par un flasque (11) servant à l'articulation des organes de suspension de l'essieu arrière.

18. Véhicule utilitaire selon la revendication 1, caractérisé en ce que les deux parties (2/1, 2/2 ou 3/1, 3/2) de chaque longeron (2, 3) du cadre ont des sections différentes.

19. Véhicule utilitaire selon la revendication 18, caractérisé en ce que la partie de section la plus forte (2/1, 2/2 ou 3/1, 3/2) de chaque longeron de cadre (2, 3) est au choix la partie inférieure ou la partie supérieure.

20. Véhicule utilitaire selon la revendication 1, caractérisé en ce que les deux parties (2/1, 2/2 ou 3/1, 3/2) d'un longeron de cadre (2, 3) ont la même section.

21. Véhicule utilitaire selon une ou plusieurs des revendications précédentes, caractérisé en ce que chaque fois les parties supérieures (2/1, 3/1) et les parties inférieures respectives (2/2, 3/2) des deux longerons (2, 3) sont reliées par au moins une traverse (23, 24) et notamment plusieurs traverses.

22. Véhicule utilitaire selon la revendication 21, caractérisé en ce que chaque fois deux traverses (23, 24) superposées sont reliées directement ou par une pièce intermédiaire (25).

23. Véhicule utilitaire selon la revendication 21, caractérisé en ce que chaque fois deux traverses (23, 24) superposées, sont réalisées avec les entretoises (26) qui les relient par une pièce de tôle pressée.

24. Véhicule utilitaire selon une ou plusieurs des revendications 1 à 17, caractérisé en ce que les deux parties (2/1, 2/2 ou 3/1, 3/2) d'un longeron de cadre (2, 3) comportent extérieurement des supports en équerre (15) fixés par leur branche verticale (15/1), de préférence par vissage, et servant de support à des équipements du véhicule (14) tels qu'un ou plusieurs réservoirs de carburant et/ou d'air comprimé, de caisson à batterie, de caisson de stockage ou à des équipements analogues.

25. Véhicule utilitaire selon une ou plusieurs des revendications 1 à 17, caractérisé en ce que les deux parties (2/1, 2/2 ou 3/1, 3,2) des longerons de cadre (2, 3) comportent des supports (62, 63, 64) portant des panneaux latéraux de protection contre l'encastrement (66).

26. Véhicule utilitaire selon la revendication 25, caractérisé en ce que les panneaux latéraux de protection contre l'encastrement (66) s'appuient sur des supports (62, 63, 64) par des dispositifs souples d'absorption de l'énergie (65).

27. Véhicule utilitaire selon la revendication 26, caractérisé en ce que dans le volume compris entre les panneaux de protection contre l'encastrement (66) et les parties de longeron (2/2, 2/3 ou 3/2, 3/3) qui les portent il y a, en retrait dans ces parties, dans la zone non déformable des supports (62, 63, 64), des équipements du véhicule (14) comme par exemple le réservoir de carburant et/ou le réservoir d'air comprimé, le caisson à batteries, un caisson de stockage ou des moyens analogues, logés de manière protégée.

28. Véhicule utilitaire selon l'une des revendications 10,11, 16 et 17, caractérisé en ce que les extrémités arrière des parties supérieures de longeron (2/1, 3/1) ou des segments arrière de longeron (2/4, 3/4) sont abaissées jusqu'à la hauteur (H3) d'un pare-chocs de véhicule de tourisme et les extrémités arrière de ces segments de longeron (2/5, 3/5) abaissées, portent une barre de protection contre les chocs (70) ou une tôle d'habillage (71) entourant de manière aérodynamique l'arrière, en étant soutenue par au moins un dispositif absorbant l'énergie (72), qui cède dans la direction longitudinale, de façon qu'en cas de choc d'un véhicule de tourisme, celui-ci puisse pénétrer dans la zone d'écrasement du véhicule utilitaire, arrière, conçue de cette manière et que le ou les dispositifs d'absorption d'énergie (37) puissent dissiper l'énergie du choc.

29. Véhicule utilitaire selon la revendication 28, caractérisé en ce que les extrémités arrière des segments arrière de longeron (2/4, 3/4) ou des parties supérieures de longeron (2/1, 3/1) sont munies d'une fourche dont les parties inférieures de fourche sont formées par des segments abaissés de longeron (2/5, 3/5) alors que les parties supérieures de fourche sont constituées par des segments de longeron relevés (2/6, 3/6), dont la face inférieure se termine au moins à la hauteur (H3) d'un parechocs (22) de véhicule de tourisme et sont conçues pour qu'en cas de choc arrière, un véhicule de tourisme puisse pénétrer dans la zone d'écrasement arrière ainsi conçue, du véhicule utilitaire, par déplacement longitudinal de la barre de protection contre les chocs (70) ou de la tôle d'habillage (71) jusqu'à la déformation finale du ou des dispositifs d'absorption d'énergie (72).

30. Véhicule utilitaire selon la revendication 28, caractérisé en ce que l'abaissement des extrémités arrière des longerons (2/5, 3/5) est fait par cintrage de ses extrémités ou en soudant une partie correspondante de longeron.

31. Véhicule utilitaire selon la revendication 29, caractérisé en ce que la fourche arrière et ses parties (2/5, 2/6 ou 3/5, 3/6) ainsi que la partie de longeron qui précède (2/4, 3/4 ou 2/1, 3/1) sont réalisées sous la forme de pièces en tôle pressées ou de pièces en construction mécano soudée.

32. Véhicule utilitaire selon la revendication 21, caractérisé par un dispositif absorbant l'énergie (18), indépendant prévu à chaque partie inférieure (17/1) de la fourche verticale frontale (17) de chaque longeron de cadre (2, 3).

33. Véhicule utilitaire selon la revendication 1, caractérisé en ce que les parties inférieures de fourche (17/1) de chaque fourche verticale frontale (17) portent sur les deux longerons de cadre (2, 3), un dispositif absorbant l'énergie (18) s'étendant derrière le pare-chocs (19) au moins approximativement sur toute la longueur du pare-chocs (19) (largeur du véhicule).

34. Véhicule utilitaire selon l'une des revendications 32 et 33, caractérisé en ce que le ou les dispositifs absorbant l'énergie (18) sont montés sur une traverse et sont reliés à celle-ci reliant l'extrémité avant des parties inférieures (17/1) de la fourche verticale (17) des deux longerons (2, 3).

35. Véhicule utilitaire selon l'une des revendications 32 à 34, caractérisé en ce que le pare-chocs (19) comporte des entretoises intérieures auxquelles sont reliés le ou les dispositifs absorbant l'énergie (18).

36. Véhicule utilitaire selon la revendication 1, caractérisé en ce que les segments avant de longeron (2/3, 3/3) sont également munis de cavités et de bossages (44, 44/1, 44/2, 44/3, 44/4 ; 47, 48, 50, 57, 58) pour le branchement direct d'organes de suspension de roue indépendante, et pour la suspension indépendante de chaque roue avant (27, 28) il y a deux bras transversaux triangulaires (29, 30, 31, 32), écartés, agissant sensiblement dans un plan transversal parallèle, ces bras étant articulés par leur extrémité intérieure au cadre (1) et par leur extrémité extérieure, en haut ou en bas à la branche d'essieu (33, 34) de la roue avant correspondante (27, 28) par un organe de raccordement (35, 36, 37, 38) suivant une liaison articulée, et chaque bras transversal triangulaire supérieur (29, 31) pénètre avec ses oeillets de palier (29/3, 29/4 ; 31/3, 31/4) prévus à l'extrémité intérieure, dans des cavités (44) prévues extérieurement sur le segment avant de longeron (2/3, 3/3) et fixé directement extérieurement par une articulation à pattes (43), chaque bras transversal triangulaire inférieur (30, 32) ayant en outre des branches plus longues (30/1, 30/2 ; 32/1, 32/2) avec des oeillets de palier (30/3, 30/4 ; 32/3, 32/4) plus écartés que le bras transversal triangulaire supérieur correspondant (29, 31) et extérieurement avec ses oeillets de palier (30/3, 30/4 ; 32/3, 32/4) situés à l'intérieur, dans la zone inférieure de deux traverses (45, 46) abaissées, ayant sensiblement une forme de (V) en vue de face, et reliant les deux segments avant de longeron (2/3, 3/3), et dans les cavités ouvertes de profilés de ces traverses (45/1, 45/2, 45/3, 46/1, 46/2, 46/3), il y pénètre par l'extérieur au niveau des autres segments de profilé (45/4, 45/5 ; 46/4, 46/5) des traverses (45, 46), en étant fixé également par des articulations à pattes (43).

37. Véhicule utilitaire selon la revendication 36, caractérisé en ce que les branches (30/1, 30/2, 32/1, 32/2) du bras transversal triangulaire inférieur (30, 32) sont plus longues que les branches (29/1, 29/2, 31/1, 31/2) du bras triangulaire supérieur (29, 31) et la distance des oeillets de palier (30/3, 30/4, 32/3, 32/4) du bras transversal triangulaire inférieur (30, 32) est plus grande que celle des oeillets de palier (29/3, 29/4 ; 31/3, 31/4) du bras transversal triangulaire supérieur (29, 31).

38. Véhicule utilitaire selon la revendication 36 caractérisé en ce que les oeillets de palier des bras transversaux triangulaires (29, 30, 31, 32) ont des surfaces latérales parallèles qui s'étendent transversalement à l'axe longitudinal du véhicule et les axes longitudinaux des articulations à pattes (43) traversant les oeillets de palier sont parallèles à l'axe longitudinal du véhicule.

39. Véhicule utilitaire selon la revendication 36, caractérisé en ce que chacune des deux traverses (45, 46) descendant en forme de (V) présentent une section ouverte (U-T) et la base est formée par un profilé en (U), ouvert vers l'extérieur et dont les deux branches latérales (45/1, 45/2 ; 46/1, 46/2) rejoignent les entretoises (T) (45/4, 46/5, 46/4, 46/5) en saillie vers l'extérieur, parallèles aux fonds (45/3, 46/3) du profilé en (U), pour l'appui et la liaison des articulations à pattes (43) fixant les bras transversaux triangulaires inférieurs (30, 32), les traverses (45, 46) étant fixées par vissage, rivetage ou soudage de leur fond de profilé en (U) à l'entretoise munie de surfaces d'appui (47, 48), inclinées de manière correspondante avec le cas échéant des cavités ou des bossages (49, 50).

40. Véhicule utilitaire selon la revendication 39, caractérisé en ce que chacune des deux traverses (45, 46) présente en vue de face, un segment horizontal (45/6, 46/6) dans sa partie la plus basse, plus grand que la largeur du groupe-moteur (4), et dont les deux extrémités se poursuivent par des branches inclinées vers le haut et vers l'extérieur (45/7, 45/8 ; 46/7, 46/8), dont la zone d'extrémité supérieure est légèrement plus pentue vers le bas et forme les segments par lesquels les traverses (45, 46) sont fixées extérieurement aux âmes des segments avant (2/3, 3/3) des longerons alors que les points de raccordement des articulation à pattes (43) servant à la fixation des bras transversaux triangulaires inférieurs (30, 32) sont prévus à l'extrémité inférieure des branches inclinées (45/7, 45/8 ; 46/7, 46/8) par des segments inclinés de branche (T).

41. Véhicule utilitaire selon l'une des revendications 37 à 40, caractérisé en ce que les cavités (44) pour recevoir les oeillets de palier (29/3, 29/4 ; 31/3, 31/4) des bras triangulaires supérieurs (29, 31) sont formés par des poches pressées, de façon excentrée, de l'extérieur dans les âmes des segments avant des longerons (2/3, 3/3), vers le bas, à proximité de la zone de coin rigide, avec la ceinture inférieure, en ce que les appuis (44/3, 44/4) fournis déjà pour chaque poche sur l'entretoise, pour l'articulation à pattes (43) respective, sont calibrés sur les parties en saillie à l'extérieur dans l'âme.

42. Véhicule utilitaire selon l'une des revendications 37 à 40, caractérisé en ce que les cavités (44) pour recevoir les oeillets de palier (29/3, 29/4 ; 31/3, 31/34) des bras triangulaires supérieurs (29, 31) sont formées chaque fois par le volume libre entre deux saillies pressées de l'intérieur vers l'extérieur de l'âme de chaque segment avant de longeron (2/3, 3/3), saillies sur lesquelles sont calibrées de manière correspondante, extérieurement, les surfaces d'appui (44/3, 44/4) pour l'articulation de pattes (43) respective correspondante.

43. Véhicule utilitaire selon l'une des revendications 37 à 40, caractérisé en ce que chacune des deux traverses (45, 46) en forme de (V) est une pièce en tôle pressée.

44. Véhicule utilitaire selon l'une des revendications 37 à 40, caractérisé en ce que chacune des deux traverses en forme de (V) (45, 46) est réalisée par deux pièces en tôle pressée, symétriques par rapport au plan de symétrie longitudinal du véhicule et sont réunies par soudage le long du plan de symétrie.

45. Véhicule utilitaire selon la revendication 36, caractérisé en ce qu'en cas de suspension pneumatique, pour le montage d'un bloc de ressort (56) qui reçoit en haut le ressort pneumatique (54) de chaque roue avant (27, 28), chaque segment avant de longeron (2/3, 3/3) est tiré localement vers le haut et vers l'extérieur (57) et comporte une cavité (58) dans laquelle est fixé un profil (57, 58) du bloc de ressort (56) adapté par la forme par sa zone de raccordement (56/1), et en ce que chaque ressort pneumatique (54) est réuni en partie haute à un amortisseur (53) articulé en partie basse par l'un des bras transversaux triangulaires correspondants (29, 30 ; 31, 32) dans la zone transitoire entre ses deux branches.
